# EUROPEAN PATENT APPLICATION

(11) **EP 4 845 104 A1**
(43) Date of publication of application: **25.11.2026**
(21) Application number: 25751146.9
(22) Date of filing: 20.01.2025
(51) Int. Cl.: H04L 12/28, G06F 21/44

(54) **SERVICE LIST INSTALLATION METHOD AND COMMUNICATION APPARATUS**

(30) Priority: 07.02.2024 CN 202410175995
(71) Applicant: Huawei Technologies Co., Ltd., Shenzhen, Guangdong 518129 (CN)
(72) Inventor: ZHOU, Xiaoyun, Shenzhen, Guangdong 518129 (CN); ZHANG, Yongjing, Shenzhen, Guangdong 518129 (CN)
(74) Representative: Huawei European IPR
(86) International application number: PCT/CN2025/073254
(87) International publication number: WO 2025/167544

(57) **Abstract**

A service list installation method and a communication apparatus are provided. In the method, a terminal may obtain a service list, where the service list includes first information, and the first information is used to obtain a first interaction result from a user during installation of the service list; and then, the terminal installs or does not install the service list based on the first interaction result. The method can implement interaction with the user during installation of the service list, to reduce a quantity of interactions with the user, thereby improving user experience.

## Description

This application claims priority to Chinese Patent Application No. 202410175995.9, filed with the China National Intellectual Property Administration on February 7, 2024 and entitled "SERVICE LIST INSTALLATION METHOD AND COMMUNICATION APPARATUS", which is incorporated herein by reference in its entirety.

### TECHNICAL FIELD

This application relates to the field of communication technologies, and more specifically, to a service list installation method and a communication apparatus.

### BACKGROUND

Digital video broadcasting (digital video broadcasting, DVB) is a series of internationally recognized digital television public standards that are maintained by the DVB project. The DVB standards provide a set of complete digital television system specifications applicable to different media. Digital video broadcasting-internet (digital video broadcasting-internet, DVB-I) is a mechanism defined in the DVB to obtain a service (Service) in a plurality of transmission modes after the service is discovered through the Internet.

When a DVB-I client needs to discover a service, the DVB-I client obtains and installs a corresponding service list (Service List), and then accesses a service based on service information in the service list. Some services need to comply with corresponding laws and regulations. Therefore, a user needs to be informed and consent of the user needs to be obtained before the user accesses the services. Alternatively, some services involve personal privacy. Therefore, user authorization needs to be obtained before a user accesses the services. It can be learned that when a user accesses a service in a service list currently, the DVB-I client needs to interact with the user for a plurality of times for different services in the service list, which affects user experience.

### SUMMARY

This application provides a service list installation method and a communication apparatus, to reduce a quantity of interactions between a user and a terminal, thereby improving user experience.

According to a first aspect, a service list installation method is provided. The method may be performed by a terminal, or may be performed by a component (for example, a chip or a circuit) of a terminal, which is not limited. For example, in a DVB system, the terminal may be considered as a DVB-I client.

The method includes: obtaining a service list, where the service list includes first information, and the first information is used to obtain a first interaction result from a user during installation of the service list; obtaining the first interaction result based on the first information; and installing or skipping installing the service list based on the first interaction result.

In the foregoing technical solution, during installation of the service list, the terminal may uniformly interact with the user for based on a service in the service list to obtain the first interaction result, and the terminal determines, based on the first interaction result, whether to install the first service list. This method may avoid a plurality of interactions between the user and the terminal when the user accesses the service in the service list, thereby improving user experience.

In some implementations of the first aspect, the service list further includes service information of at least one service.

In some implementations of the first aspect, the first information includes information that needs to be confirmed by the user during installation of the service list or a first address, the first address is an access portal address of the information that needs to be confirmed by the user during installation of the service list, and the first interaction result includes a result of confirming, by the user, the information that needs to be confirmed by the user; or the first information is used to request the user to provide authentication information required during installation of the service list, and the first interaction result includes the authentication information provided by the user.

In some implementations of the first aspect, the first service list further includes second information, the second information is used to send a result of interaction with the user, and the method further includes: sending the first interaction result based on the second information.

In some implementations of the first aspect, the second information includes a second address, and the second address is a destination address to which the first interaction result is sent.

In some implementations of the first aspect, after the installing the service list based on the first interaction result, the method further includes: obtaining a second interaction result from the user, where the second interaction result indicates the user to update or cancel the first interaction result; sending the second interaction result based on the second information; and maintaining or deleting the service list based on the second interaction result.

In a possible scenario, because information related to installation of the first service list changes (for example, information that needs to be confirmed by the user during installation of the service list changes, or authentication information previously provided by the user has expired), the terminal displays, to the user, new information that needs to be confirmed by the user, or re-requests the user to provide authentication information, and then obtains a new interaction result from the user (that is, updates the first interaction result).

In another possible scenario, after a period of time following completion of installation of the service list, the user decides to cancel previous confirmation of the information that needs to be confirmed by the user or cancel previous authentication, and the terminal obtains a new interaction result from the user (that is, cancels the first interaction result).

In some implementations of the first aspect, the service list includes service information of a plurality of services, the service list further includes an application scope of the first information, and the application scope indicates a scope of services that are in the service list and to which the first information is applicable. For example, the application scope may be all the services in the service list, or the application scope may be a part of services in the service list.

In some implementations of the first aspect, the first information indicates a first linked application.

In the foregoing technical solution, the terminal may implement interaction with the user through the first linked application during installation of the service list.

In some implementations of the first aspect, the first information includes information about the first linked application, and the information about the first linked application includes at least one of the following: an identifier of the first linked application, a type of the first linked application, a launch condition of the first linked application, and a life cycle of the first linked application.

In some implementations of the first aspect, the method further includes: sending, through the first linked application, a result of interaction with the user.

In some implementations of the first aspect, the method further includes: obtaining, through the first linked application, information that needs to be confirmed by the user during installation of the service list, where the first interaction result includes a result of confirming, by the user, the information that needs to be confirmed by the user; or obtaining request information through the first linked application, where the request information is used to request the user to provide authentication information required during installation of the service list, and the first interaction result includes the authentication information provided by the user.

In the foregoing technical solution, the terminal may obtain, through the first linked application, confirmation information or an authentication request related to installation of the service list.

In some implementations of the first aspect, after the installing the service list based on the first interaction result, the method further includes: obtaining a second interaction result from the first linked application or a second linked application, where the second interaction result indicates the user to update or cancel the first interaction result; sending the second interaction result through the first linked application or the second linked application, where the second linked application is used to implement interaction with the user after the service list is installed; and maintaining or deleting the service list based on the second interaction result.

In the foregoing technical solution, after the service list is installed, the terminal may continue to perform update interaction or cancel interaction with the user based on the first linked application, or implement update interaction or cancel interaction with the user based on a new linked application.

In some implementations of the first aspect, the first information further includes information about the second linked application, and the information about the second linked application includes at least one of the following: an identifier of the second linked application, a type of the second linked application, a launch condition of the second linked application, and a life cycle of the second linked application.

In some implementations of the first aspect, the installing or skipping installing the service list based on the first interaction result includes: if the first interaction result indicates that the user agrees to the information that needs to be confirmed by the user, installing the service list; or receiving authentication confirmation information, and if the authentication confirmation information indicates that the authentication information provided by the user has passed authentication, installing the service list.

In some implementations of the first aspect, the information that needs to be confirmed by the user during installation of the service list includes at least one of an agreement, a term, and a condition to which the user needs to agree to access a service in the service list.

According to a second aspect, a service list installation method is provided. The method may be performed by a service list server, or may be performed by a component (for example, a chip or a circuit) of a service list server, which is not limited.

The method includes: configuring a service list, where the service list includes first information, the first information is used to obtain a first interaction result from a user during installation of the service list, and the first interaction result is used to determine whether a terminal is capable of installing the service list; and sending the service list to the terminal.

For beneficial effects of the second aspect, refer to the descriptions of the first aspect. Details are not described herein again.

In some implementations of the second aspect, the first information includes information that needs to be confirmed by the user during installation of the service list or a first address, the first address is an access portal address of the information that needs to be confirmed by the user during installation of the service list, and the first interaction result includes a result of confirming, by the user, the information that needs to be confirmed by the user; or the first information is used to request the user to provide authentication information required during installation of the service list, and the first interaction result includes the authentication information provided by the user.

In some implementations of the second aspect, the first service list further includes second information, the second information is used to send a result of interaction with the user, and the method further includes: sending the first interaction result based on the second information.

In some implementations of the second aspect, the second information includes a second address, and the second address is a destination address to which the first interaction result is sent.

In some implementations of the second aspect, the first information indicates a first linked application.

In some implementations of the second aspect, the first information includes information about the first linked application, and the information about the first linked application includes at least one of the following: an identifier of the first linked application, a type of the first linked application, a launch condition of the first linked application, and a life cycle of the first linked application.

In some implementations of the second aspect, the service list includes service information of at least one service.

In some implementations of the second aspect, if the first interaction result indicates that the user agrees to install the service list, an authorization server may allocate a first confirmation identifier to a service in the service list, where the first confirmation identifier is used by the terminal to subsequently access a service that is provided by a service provider and that is in the service list. Then, the authorization server notifies the terminal and the service provider of the first confirmation identifier. It may be understood that, the service in the service list is provided by the service provider.

For example, the first confirmation identifier may be a token (Token).

In some implementations of the second aspect, the method further includes: receiving first service list configuration information from the service provider, where the first service list configuration information includes the service information and the first information; or receiving second service list configuration information from the service provider, where the second service list configuration information includes the service information; and determining the first information based on the service information.

In some implementations of the second aspect, the first information is further used to indicate a second linked application, and the second linked application is used to implement interaction with the user after the service list is installed.

In some implementations of the second aspect, the first information further includes information about the second linked application, and the information about the second linked application includes at least one of the following: an identifier of the second linked application, a type of the second linked application, a launch condition of the second linked application, and a life cycle of the second linked application.

According to a third aspect, a service list installation method is provided. The method may be performed by an authorization server, or may be performed by a component (for example, a chip or a circuit) of an authorization server, which is not limited.

The method includes: receiving a first interaction result from a terminal, where the first interaction result is a result of interaction between the terminal and a user, and the first interaction result is used to determine whether the terminal is capable of installing a service list; and sending a first message to the terminal, where the first message is used to confirm that the first interaction result is received.

For beneficial effect of the third aspect, refer to the descriptions in the first aspect. Details are not described herein again.

In some implementations of the third aspect, the receiving the first confirmation message from the terminal includes: receiving the first interaction result from a first linked application of the terminal.

In some implementations of the third aspect, the first interaction result includes a result of confirming, by the user, information that needs to be confirmed by the user.

In some implementations of the third aspect, the information that needs to be confirmed by the user during installation of the service list includes at least one of an agreement, a term, and a condition to which the user needs to agree to access a service in the service list.

In some implementations of the third aspect, if the first interaction result includes authentication information provided by the user, the first message includes authentication confirmation information, and the authentication confirmation information indicates that the authentication information provided by the user has passed or not passed authentication.

In some implementations of the third aspect, the first interaction result is used to determine that the terminal is capable of installing the service list, and the method further includes: receiving a second interaction result from the terminal, where the second interaction result indicates the user to update or cancel the first interaction result.

In some implementations of the third aspect, the second interaction result from a second linked application of the terminal is received, where the second linked application is used to implement interaction with the user after the service list is installed.

According to a fourth aspect, a communication apparatus is provided. The communication apparatus is configured to perform the method according to any one of the first aspect to the third aspect. Specifically, the communication apparatus may include a unit and/or a module configured to perform the method according to any one of the first aspect or the implementations of the first aspect, or include a unit and/or a module configured to perform the method according to any one of the second aspect or the implementations of the second aspect, or include a unit and/or a module configured to perform the method according to any one of the third aspect or the implementations of the third aspect.

In an implementation, the communication apparatus is a device (for example, a terminal device, a service list server, or an authorization server). When the communication apparatus is the device, a transceiver unit may be a transceiver or an input/output interface, and a processing unit may be at least one processor. Optionally, the transceiver may be a transceiver circuit. Optionally, the input/output interface may be an input/output circuit.

In another implementation, the communication apparatus is a chip, a chip system, or a circuit used in a device (for example, a terminal device, a service list server, or an authorization server). When the communication apparatus is the chip, the chip system, or the circuit used in the device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a fifth aspect, a communication apparatus is provided. The apparatus includes: a memory, configured to store a program; and at least one processor, configured to execute a computer program or instructions stored in the memory, to perform the method according to any one of the first aspect or the implementations of the first aspect, or perform the method according to any one of the second aspect or the implementations of the second aspect, or perform the method according to any one of the third aspect or the implementations of the third aspect.

In an implementation, the communication apparatus is a device (for example, a terminal device, a service list server, or an authorization server).

In another implementation, the apparatus is a chip, a chip system, or a circuit used in a device (for example, a terminal device, a service list server, or an authorization server).

According to a sixth aspect, this application provides a processor, configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable medium stores program code to be executed by a device. The program code includes instructions used to perform the method according to any one of the first aspect or the implementations of the first aspect, or includes instructions used to perform the method according to any one of the second aspect or the implementations of the second aspect, or includes instructions used to perform the method according to any one of the third aspect or the implementations of the third aspect.

According to an eighth aspect, a computer program product including instructions is provided. When the computer program product runs on a computer, the computer is enabled to perform the method according to any one of the first aspect or the implementations of the first aspect, or the computer is enabled to perform the method according to any one of the second aspect or the implementations of the second aspect, or the computer is enabled to perform the method according to any one of the third aspect or the implementations of the third aspect.

According to a ninth aspect, a chip is provided. The chip includes a processor and a communication interface. The processor reads, through the communication interface, instructions stored in a memory, to perform the method according to any one of the first aspect or the implementations of the first aspect, or perform the method according to any one of the second aspect or the implementations of the second aspect, or perform the method according to any one of the third aspect or the implementations of the third aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the first aspect or the implementations of the first aspect, or perform the method according to any one of the second aspect or the implementations of the second aspect, or perform the method according to any one of the third aspect or the implementations of the third aspect.

According to a tenth aspect, a communication system is provided, including at least one of the foregoing terminal device, service list server, and authorization server.

### BRIEF DESCRIPTION OF DRAWINGS

FIG. 1 is a diagram of a DVB-I logical architecture;
FIG. 2 and FIG. 3 are diagrams of system architectures applicable to embodiments of this application;
FIG. 4 is a schematic flowchart of a service list installation method 400 according to an embodiment of this application;
FIG. 5A and FIG. 5B to FIG. 7 each are a schematic flowchart of a specific service list installation method provided in an embodiment of this application based on the architecture shown in FIG. 2;
FIG. 8A and FIG. 8B to FIG. 10 each are a schematic flowchart of a specific service list installation method provided in an embodiment of this application based on the architecture shown in FIG. 3;
FIG. 11A and FIG. 11B to FIG. 13 each are a schematic flowchart of another specific service list installation method provided in an embodiment of this application based on the architecture shown in FIG. 2;
FIG. 14A and FIG. 14B to FIG. 16 each are a schematic flowchart of another specific service list installation method provided in an embodiment of this application based on the architecture shown in FIG. 3;
FIG. 17 is a block diagram of a communication apparatus 200 according to an embodiment of this application; and
FIG. 18 is a block diagram of a communication apparatus 300 according to an embodiment of this application.

### DESCRIPTION OF EMBODIMENTS

The following describes technical solutions of embodiments in this application with reference to accompanying drawings.

Before embodiments of this application are described, the following several descriptions are first provided.
1. In descriptions of embodiments of this application, "a plurality of" means two or more than two, unless otherwise specified.
2. In embodiments of this application, unless otherwise stated or there is a logic conflict, terms and/or descriptions in different embodiments are consistent and may be mutually referenced, and technical features in different embodiments may be combined based on an internal logical relationship between the technical features, to form a new embodiment.
3. Numbers in this application are merely used for distinguishing for ease of description, but are not intended to limit the scope of this application. Sequence numbers in this application do not mean execution sequences. Execution sequences of processes should be determined based on functions and internal logic of the processes. For example, in the specification, claims, and accompanying drawings of this application, the terms "first", "second", "third", and various other terminology reference numerals (for example, #1, #2, and #3) are intended to distinguish between similar objects, but are not intended to limit sizes, content, sequences, time sequences, priorities, importance, or the like of a plurality of objects. For example, first information and second information do not indicate a difference in information amount, content, priority, importance, or the like.
4. Terms "include" and "have" and any other variants thereof are intended to cover non-exclusive inclusion. For example, a process, method, system, product, or device that includes a list of steps or units is not necessarily limited to those steps or units expressly listed, but may include other steps or units not expressly listed or inherent to such a process, method, system, product, or device.
5. In embodiments of this application, "a network element A sends information A to a network element B" may be understood as that a destination end of the information A or an intermediate network element in a transmission path between the network element A and the destination end is the network element B, and may include directly or indirectly sending information to the network element B; and "the network element B receives the information A from the network element A" may be understood as that a source end of the information A or an intermediate network element in a transmission path between the network element B and the source end is the network element A, and may include directly or indirectly receiving information from the network element A. Information may undergo necessary processing, for example, a format change, between a source end of information sending and a destination end. However, the destination end may understand valid information from the source end. Similar descriptions in this application may be understood similarly, and details are not described herein.

In other words, sending and receiving may be performed between devices, for example, between a network device #1 and a terminal device #2; or may be performed inside a device. For example, sending or receiving is performed between components, modules, chips, software modules, or hardware modules inside the device through a bus, a cable, or an interface.

6. In embodiments of this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, pre-stored, pre-burned, or pre-configured.

7. In embodiments of this application, that information C is used to determine information D includes that the information D is determined based on only the information C, and that the information D is determined based on the information C and other information. In addition, that the information C is used to determine the information D may further include an indirect determining case. For example, the information D is determined based on information E, and the information E is determined based on the information C.

8. In embodiments of this application, "store" or "save" may be storing in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

9. Arrows or blocks shown by dashed lines in diagrams of the accompanying drawing part in the specification of this application represent optional steps or modules.

The technical solutions of embodiments of this application may be applied to various communication systems, including but not limited to a 5th generation (5th generation, 5G) system, a new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may be further applied to a future communication system, for example, a 6th generation mobile communication system. In addition, the technical solutions may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, another communication system, and the like. This is not limited in this specification.

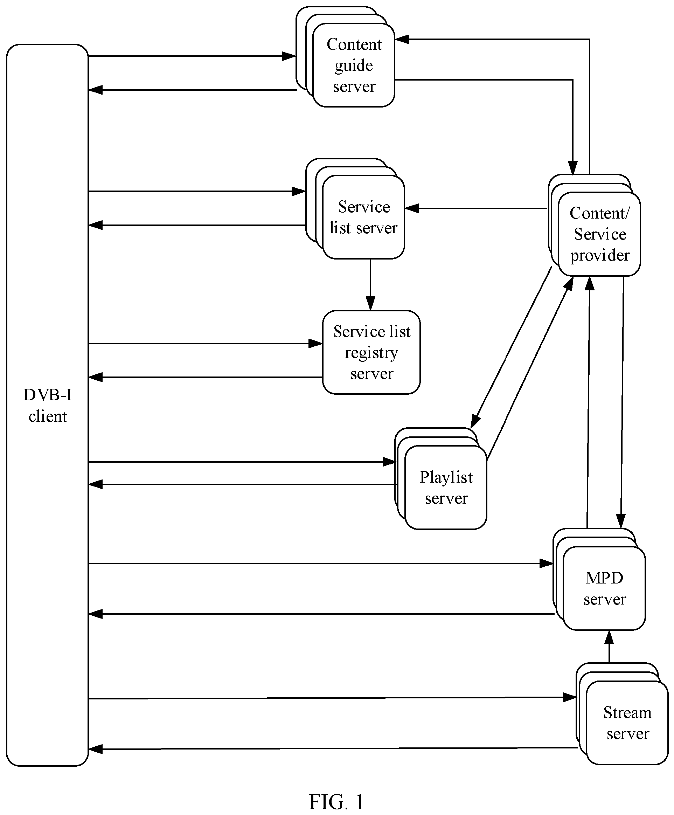

FIG. 1 is a diagram of a DVB-I logical architecture. This architecture includes a DVB-I client (DVB-I Client), a service list server (Server), a content/service provider (Content/Service Provider) (referred to as a service provider), a media presentation description (media presentation description, MPD) server, a stream server (Stream Server), a content guide server (Content Guide Server), a service list registry (Service List registry) server, and a playlist server (Playlist Server).

The DVB-I client is a client function network element that supports DVB-I service discovery. The DVB-I client may be integrated in various terminal devices, such as a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a smart television, and a set-top box. The service list server is a server that provides a service list to the DVB-I client. The service provider is an organization that provides DVB-I services. The MPD server is a server that provides a dynamic adaptive streaming over HTTP (dynamic adaptive streaming over HTTP, DASH) MPD file. The stream server is a server that provides a DASH media segment to the DVB-I client, and the content guide server is a server that provides content guide data to the DVB-I client. The service list registry server is a server that provides a service list server address to the DVB-I client. The playlist server is a server that provides a playlist of content items to the DVB-I client.

Generally, the service provider sends a list of available services to the service list server. The service list server registers a service list access portal address (for example, a uniform resource identifier (Uniform Resource Identifier, URI)) with the service list registry server. When the DVB-I client discovers a service (Service), the DVB-I client obtains an access portal address of a service list from the service list registry server through an address of the service list registry server. Then, the DVB-I client queries and obtains the service list through the access portal address of the service list. A service list includes service information of one or more services. For example, service information of a service #1 may include a service identifier (identifier, ID), a service name, a service provider name, a service type, and a service instance (Service Instance) of the service #1. If the service #1 further provides an additional service capability through a linked application (Linked Application), the service list further includes information about the linked application (Linked Application).

Currently, after the DVB-I client completes installation of the service list, when a user uses a specific service, the user needs to perform service permission (agree or authorize) for different services or the user is requested to provide authentication information, which affects user experience.

In view of this, this application provides a service list installation method, which can effectively resolve the foregoing technical problem. The following provides examples of two possible system architectures applicable to embodiments of this application.

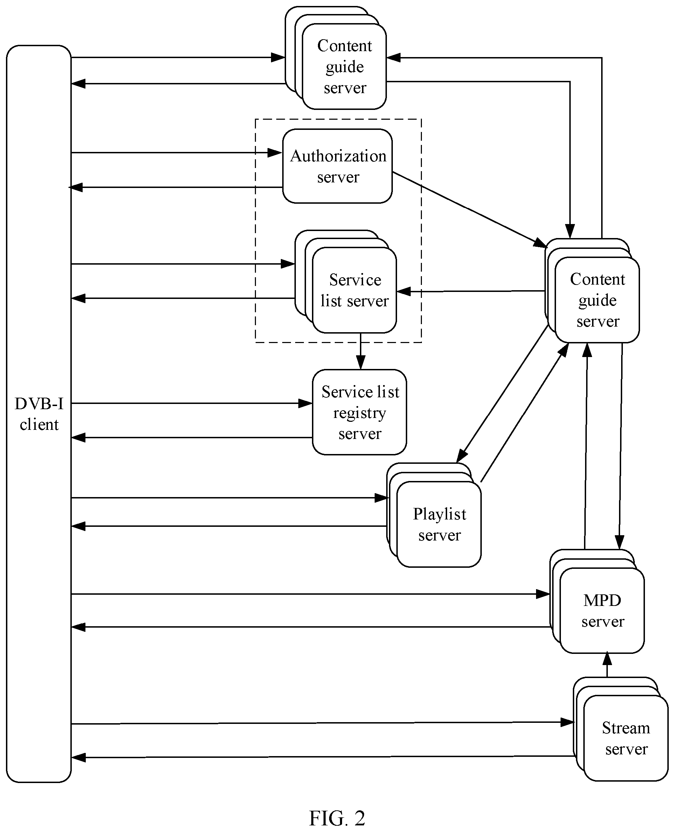

FIG. 2 is a diagram of a system architecture applicable to an embodiment of this application. The entire dashed-line box in FIG. 2 may be considered as a service list provider (Service List Provider). Compared with the architecture shown in FIG. 1, the system architecture shown in FIG. 2 additionally has an authorization server (Authorization Server) at a side of the service list provider, and the authorization server is responsible for interacting with a DVB-I client to obtain a result of interaction between a user and the DVB-I client. The service list provider further includes a service list server. During specific implementation, the service list server and the authorization server may be integrally disposed or separately disposed. For example, if the authorization server is integrated in the service list server, interaction between a terminal and the authorization server is interaction between the terminal and the service list server.

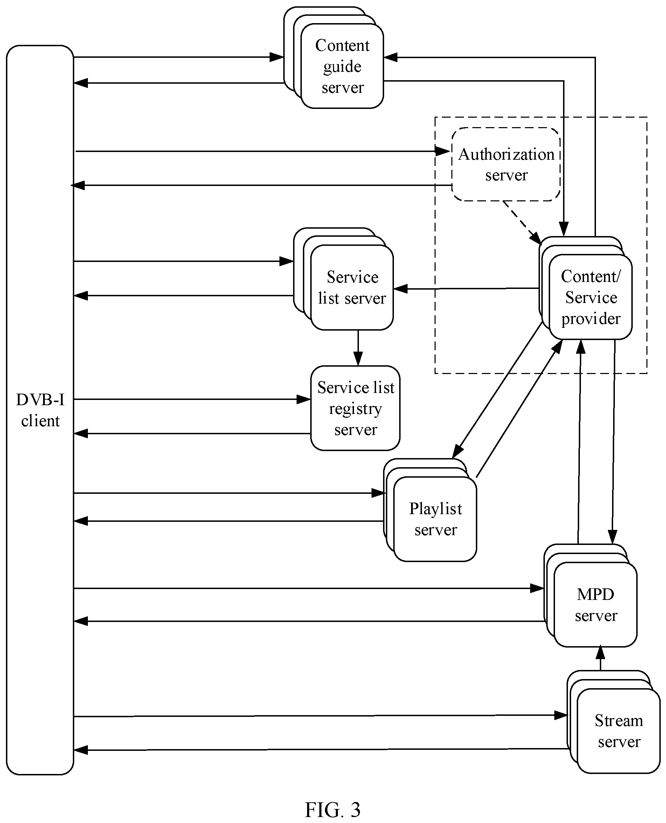

FIG. 3 is a diagram of another system architecture applicable to an embodiment of this application. Compared with the architecture shown in FIG. 1, the system architecture shown in FIG. 3 additionally has an authorization server at a side of a service provider (Service provider). For example, the service provider may further include a management server, and the management server may be configured to configure a service list for the service list server.

It may be understood that, if the method provided in this application is applied to the architecture shown in FIG. 2, the service list provider performs a step that needs to be performed by the authorization server in the corresponding method. Similarly, if the method provided in this application is applied to the architecture shown in FIG. 3, the service provider performs a step that needs to be performed by the authorization server in the corresponding method. It may be further understood that, FIG. 2 and FIG. 3 are merely examples. In another possible system architecture, the authorization server may be separately disposed independent of the service list provider and the service provider. This is not limited in this application.

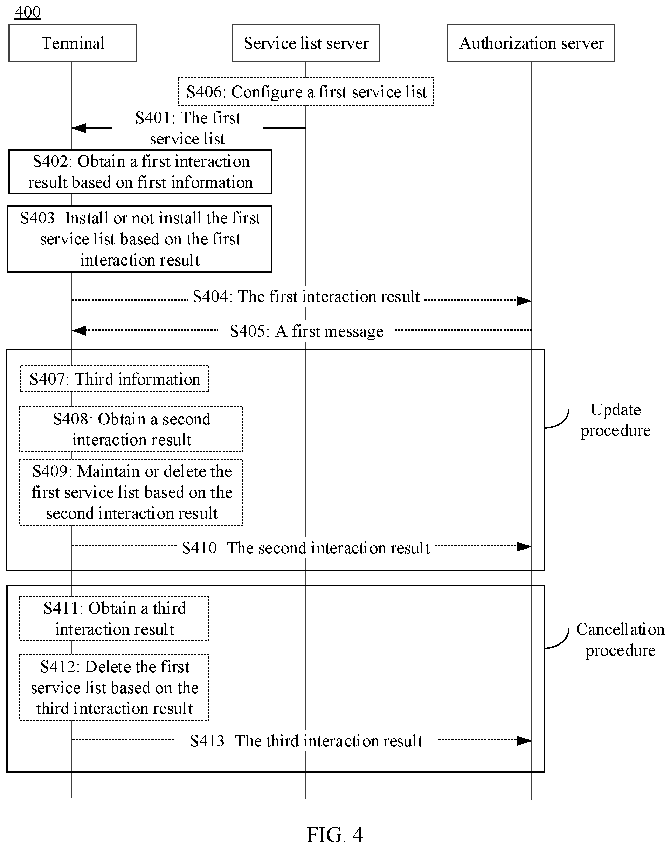

The following describes in detail the method provided in this application with reference to FIG. 4. The method shown in FIG. 4 is performed through interaction between a terminal (for example, a DVB-I client), a service list server, and an authorization server. Certainly, in some steps, other devices may be used, which is not specifically limited herein. To facilitate description of a step that needs to be performed by the authorization server, the authorization server is considered as an independently disposed server in FIG. 4 for description.

FIG. 4 is a schematic flowchart of a service list installation method 400 according to an embodiment of this application. In this solution, the terminal needs to obtain a service list. The terminal may obtain the service list from the service list server, or may obtain the service list from another terminal. For example, a terminal A has obtained and stored the service list, and a terminal B may request the service list from the terminal A. Certainly, during actual application, the terminal may alternatively obtain the service list in another manner. This is not specifically limited herein in this application. In FIG. 4, that the terminal obtains the service list from the service list server is used as an example for description. The method includes the following steps.

S401: The service list server sends a first service list to the terminal, where the service list includes first information, and the first information is used to obtain a first interaction result from a user during installation of the service list. Correspondingly, the terminal receives the first service list from the service list server.

It may be understood that, the first service list further includes service information of at least one service, and the foregoing installation of the service list is installation of a service in the service list. For example, service information of a service may include a service ID, a service name, a service provider name, a service type, a service instance, and the like, which is not specifically limited herein.

It may be further understood that, the first interaction result is used to determine whether the terminal can install the service list.

In a possible implementation, the first information includes information that needs to be confirmed by the user during installation of the service list, or the first information indicates a first address, where the first address is an access portal address of the information that needs to be confirmed by the user during installation of the service list. Correspondingly, the first interaction result includes a result of confirming, by the user, the information that needs to be confirmed by the user.

For example, the information that needs to be confirmed by the user during installation of the service list includes at least one of the following information: an agreement, a term, and a condition to which the user needs to agree. For example, the agreement to which the user needs to agree includes "whether to perform subscription in some form". For another example, the information that needs to be confirmed by the user includes a term #1. The term #1 is "whether to process personal data based on the definition in the EU's General Data Protection Regulation (general data protection regulation)".

In another possible implementation, the first information is used to request the user to provide authentication information required during installation of the service list. Correspondingly, the first interaction result includes the authentication information provided by the user.

The first information includes a type of authentication information that needs to be provided by the user. For example, the authentication information that needs to be provided by the user is a password, a user name, or face information of the user. For example, the first information is used to request the user to provide a user name and a password required during installation of the service list. After obtaining the first information, the terminal displays, to the user, "Please enter the user name and the password required for installing the first service list" on a screen.

Optionally, the first service list further includes second information, and the second information is used to send a result of interaction with the user. For example, the second information may be used to send the first interaction result that is obtained based on the first information in the foregoing two implementations.

Optionally, the second information includes a second address, and the second address is a destination address to which the first interaction result is sent. Based on the foregoing two implementations.

In still another possible implementation, the first information indicates a first linked application. To be specific, the first information indicates the terminal to interact with the user through the first linked application during installation of the service list, to obtain the first interaction result.

Optionally, the first information includes information about the first linked application, and the information about the first linked application includes at least one of the following: an identifier of the first linked application, a type of the first linked application, a launch condition of the first linked application, and a life cycle (that is, a validity period) of the first linked application.

For example, the type of the first linked application indicates that the first linked application is an agreement/authorization type application that needs to be used when the first service list in which the first information is located is installed. The launch condition of the first linked application may be during installation of the first service list or during loading of the first service list. For example, the life cycle of the first linked application is one week.

For example, the type of the first linked application may also be indirectly indicated by the identifier of the first linked application. For example, if it is specified that a linked application type of linked applications whose identifiers are 50 to 100 is an agreement/authorization application that needs to be used during installation of the service list, an application may be selected from the applications whose identifiers are 50 to 100 as the first linked application.

Optionally, based on this implementation, the method further includes: activating, by the terminal, the first linked application installed on the terminal, and obtaining, through the first linked application, information that needs to be confirmed by the user during installation of the first service list, where correspondingly, the first interaction result includes the result of confirming, by the user, the information that needs to be confirmed by the user; or activating, by the terminal, the first linked application installed on the terminal, and requesting, through the first linked application, the user to provide authentication information required during installation of the first service list, where correspondingly, the first interaction result includes the authentication information provided by the user.

Optionally, based on this implementation, the first linked application is further configured to send the result of interaction with the user (for example, the first interaction result).

It may be understood that, the foregoing examples are merely examples of descriptions of the first information, and the first information is not specifically limited in this application.

Optionally, before S401, the terminal may send a request message to the service list server based on a configuration, where the request message is used to request a service list. For example, the configuration may be that the service list is periodically obtained, or the service list is obtained upon first startup, or a location of the terminal or a language setting changes.

S402: The terminal obtains the first interaction result based on the first information.

For descriptions of the first information and the first interaction result, refer to the descriptions in S401. Details are not described herein again.

S403: The terminal installs or does not install the first service list based on the first interaction result. That is, the terminal determines, based on the first interaction result, whether the first service list can be installed.

In one implementation, the first interaction result includes the result of confirming, by the user, the information that needs to be confirmed by the user. If the first interaction result indicates that the user agrees to the information that needs to be confirmed by the user, the terminal installs the first service list; otherwise, the terminal does not install the first service list.

In another implementation, the first interaction result includes the authentication information provided by the user. If the authentication information provided by the user passes authentication of the authorization server, the first service list is installed; otherwise, the first service list is not installed. Based on this manner, the method further includes: receiving authentication confirmation information, where the authentication confirmation information indicates whether the authentication information provided by the user has passed authentication.

Optionally, if the first service list includes service information of a plurality of services, the first service list further includes an application scope of the first information, where the application scope indicates a scope of services that are in the first service list and to which the first information is applicable. For example, the application scope may be all the services in the first service list, or the application scope may be a part of services in the first service list.

Optionally, if the application scope is all the services in the first service list, the application scope may be indicated in a manner in which no information is carried by default, or may be indicated in a manner in which one piece of indication information is carried. If the application scope is a part of services in the first service list, the application scope may be indicated by carrying a related parameter of a service, for example, indicated by using one or more of a service identifier, a service name, a logical channel number (logical channel number, LCN) of the service, and a service type.

The following uses an example in which the first information is the information that needs to be confirmed by the user during installation of the service list for description, and describes, with reference to different application scopes, whether to install the service list.

For example, the application scope of the first information is all the services in the first service list. If the first interaction result indicates that the information that needs to be confirmed by the user when the user agrees to install the service list is applied to all the services in the application scope, the terminal installs the first service list (that is, installs all the services in the first service list); or if the first interaction result indicates that the information that needs to be confirmed by the user when the user agrees to install the service list is applied to a part of services in the application scope, the terminal installs only this part of services.

For example, the application scope of the first information is a part of services in the first service list. If the first interaction result indicates that the information that needs to be confirmed by the user when the user agrees to install the service list is applied to all the services in the application scope, the terminal installs all the services in the application scope, and services beyond the application scope in the first service list may be directly installed; or if the first interaction result indicates that the information that needs to be confirmed by the user when the user agrees to install the service list is applied to a part of services within the applicable scope, the terminal installs only this part of services, and the services beyond the applicable scope in the first service list may be directly installed.

For ease of description, the following uses an example in which the application scope of the first information is all the services in the first service list for description, and in this case, installing/not installing the first service list indicates installing/not installing all the services in the first service list.

Optionally, the method further includes the following steps.

S404: The terminal sends the first interaction result.

Optionally, if the first service list includes the second information, a terminal device sends the first interaction result based on the second information.

Optionally, if the first information indicates the first linked application, the terminal sends the first interaction result through the first linked application.

It can be learned from the foregoing descriptions that the authorization server is responsible for interacting with the DVB-I client (that is, the terminal) to obtain an interaction result from the user. In this case, that the terminal device sends the first interaction result based on the second information may be understood as that the terminal device sends the first interaction result to the authorization server based on the second information. When the second information includes the second address, the second address is an address of the authorization server. Similarly, that the terminal sends the first interaction result through the first linked application may be understood as that the terminal sends the first interaction result to the authorization server through the first linked application. Correspondingly, the authorization server receives the first interaction result from the terminal.

It may be understood that, the first linked application has been associated with the authorization server. Therefore, the first service list does not need to include the address of the authorization server, that is, the linked application knows the address of the authorization server.

It may be further understood that, in this application, all messages sent or received through a linked application are application layer messages. For example, the terminal sends the first interaction result through the first linked application, and the first interaction result may be carried in a first application layer message.

S405: The authorization server sends a first message to the terminal, where the first message is used to confirm that the first interaction result has been received. Correspondingly, the terminal receives the first interaction result from the authorization server.

It may be understood that, if the terminal sends the first interaction result through the first linked application, the authorization server sends the first message to the first linked application of the terminal.

Optionally, the authentication confirmation information in S403 may be separately sent, or may be carried in the first message. This is not limited in this application.

Optionally, if it is determined, based on the first interaction result, that the terminal can install the first service list, the authorization server may allocate a first confirmation identifier to a service in the first service list, where the first confirmation identifier is used by the terminal to subsequently access a service that is provided by a service provider and that is in the first service list. Then, the authorization server notifies the terminal and the service provider of the first confirmation identifier. It may be understood that, the service in the first service list is provided by the service provider.

For example, the first confirmation identifier may be a token (Token).

It should be noted that, in S402, if the first interaction result includes the result of confirming, by the user, the information that needs to be confirmed by the user, there is no sequence for performing S403 and S404, or if the first interaction result includes the authentication information provided by the user, S403 is performed after S404.

Optionally, before S401, the method further includes:
S406: The service list server configures the first service list.

The following provides two possible implementations.

Implementation 1: A management server of the service provider sends first service list configuration information to the service list server, where the first service list configuration information includes the service information of the at least one service and the first information in S401. Correspondingly, the service list server receives the first service list configuration information from the management server of the service provider. Then, the service list server determines the first service list based on the obtained first service list configuration information.

For example, in this implementation, the first service list configuration information may be manually configured offline by the service provider, or may be configured through interaction between the management server of the service provider and the service list server.

Implementation 2: The management server of the service provider sends second service list configuration information to the service list server, where the second service list configuration information includes the service information of the at least one service in S401. Correspondingly, the service list server receives the second service list configuration information from the management server of the service provider, and then the service list server determines the first information based on the service information of the at least one service, so as to determine the first service list.

In a possible scenario, after a period of time following completion of installation of the first service list, because information related to installation of the first service list changes (for example, the information that needs to be confirmed by the user during installation of the first service list changes, or the authentication information previously provided by the user expires), the terminal needs to interact with the user again to obtain a new interaction result (that is, update the first interaction result), thereby determining whether to maintain the installation of the first service list. For ease of description, an update procedure is described herein by using an example in which the information that needs to be confirmed by the user during installation of the first service list changes.

S407: The terminal obtains third information, where the third information includes update information that needs to be confirmed by the user to maintain the first service list. Correspondingly, the terminal receives the third information from the service list server.

For example, the information that needs to be confirmed by the user in S401 includes a term 1. For example, the term 1 is "Do you agree that personal data is processed based on the definition in the GDPR". If the user agrees to the term 1, the terminal installs the first service list. After a period of time, the information that needs to be confirmed by the user for installing the first service list changes. For example, in addition to the term 1, the information that needs to be confirmed by the user for installing the first service list also includes a term 2, and the term #2 is "Do you agree that services are accessed only in the EU". In this case, the update information included in the third information is the term 1 and the term 2.

Optionally, the third information is carried in a second service list, and the second service list further includes the service information of the at least one service in the first service list.

In one implementation, if the terminal does not activate the first linked application (that is, the first information does not indicate the first linked application), the terminal may send a request message to the service list server based on a configuration, where the request message is used to request a service list. Correspondingly, the terminal obtains the second service list from the service list server. For example, the configuration may be a period of updating the service list.

In another implementation, if the terminal activates the first linked application (that is, the first information does not indicate the first linked application), the authorization server may directly send the third information to the first linked application installed in the terminal.

In still another implementation, if the first information indicates a second linked application in addition to the first linked application, and the second linked application is used to implement interaction with the user after the first service list is installed, the terminal activates the second linked application installed in the terminal after completing installation of the first service list, and the authorization server may directly send the third information to the second linked application.

S408: The terminal obtains a second interaction result from the user, where the second interaction result is a result of confirming the third information by the user.

For example, based on the descriptions in S407, the terminal may directly interact with the user to obtain the second interaction result, or the terminal interacts with the user through the first linked application or the second linked application to obtain the second interaction result.

S409: The terminal maintains or deletes the first service list based on the second interaction result.

If the second interaction result indicates that the user agrees to the third information, the terminal maintains installation of the first service list; otherwise, the terminal deletes the first service list (that is, uninstalls the services in the installed first service list). Based on the example in S407, if the user agrees to the term 1 and the term 2, the installed first service list is maintained; or if the user does not agree to the term 1 and the term 2, the installed first service list is deleted.

S410: The terminal sends the second interaction result.

For example, based on the descriptions in S407, the terminal may directly send the second interaction result, or the terminal sends the second interaction result through the first linked application or the second linked application.

It can be learned from the foregoing descriptions that the authorization server is responsible for interacting with the DVB-I client (that is, the terminal) to obtain an interaction result from the user. In this case, that the terminal device sends the second interaction result may be understood as that the terminal sends the second interaction result to the authorization server. Correspondingly, the authorization server receives the second interaction result from the terminal.

It may be understood that, if the terminal deletes the first service list, the authorization server indicates the terminal and the service provider to cancel the first confirmation identifier previously allocated to the first service list.

In another possible scenario, after a period of time following completion of installation of the first service list, the user may further cancel the first interaction result. The following describes a cancellation procedure.

S411: The terminal obtains a third interaction result, where the third interaction result indicates that the user cancels the first interaction result.

For example, the first information includes the term 1, the term 1 is "Do you agree that personal data is processed based on the definition in the GDPR", and the first interaction result indicates that the user agrees to the term 1. Then, the user decides to cancel the confirmation on the term 1 (that is, cancel the first interaction result), and performs cancellation interaction with the terminal. For example, the user may click a related "cancel" button on a terminal interface to implement interaction with the terminal.

S412: The terminal deletes the first service list based on the third interaction result.

S413: The terminal sends the third interaction result. The description of this step is similar to that of S410, and details are not described herein again.

Optionally, if the user cancels confirmation of only a part of services, the third interaction result further includes a cancellation scope. The cancellation scope is used to notify the authorization service of services for which confirmation is canceled. In this scenario, in S411, the terminal deletes only services in the cancellation scope.

To better describe the solutions of this application, the following provides four possible specific implementation solutions based on the method 400.

Solution 1: This solution is based on the architecture shown in FIG. 2. The service list server obtains service list configuration information from one or more service providers, where the service list configuration information includes service information and the foregoing first information (refer to the descriptions in S401). The service list server may configure, based on the obtained service list configuration information, a service list that includes the corresponding first information and that is sent to the terminal device. In this solution, the DVB-I client does not depend on a linked application and natively supports interaction with the user and the authorization server. For ease of description, the following describes the solution in detail.

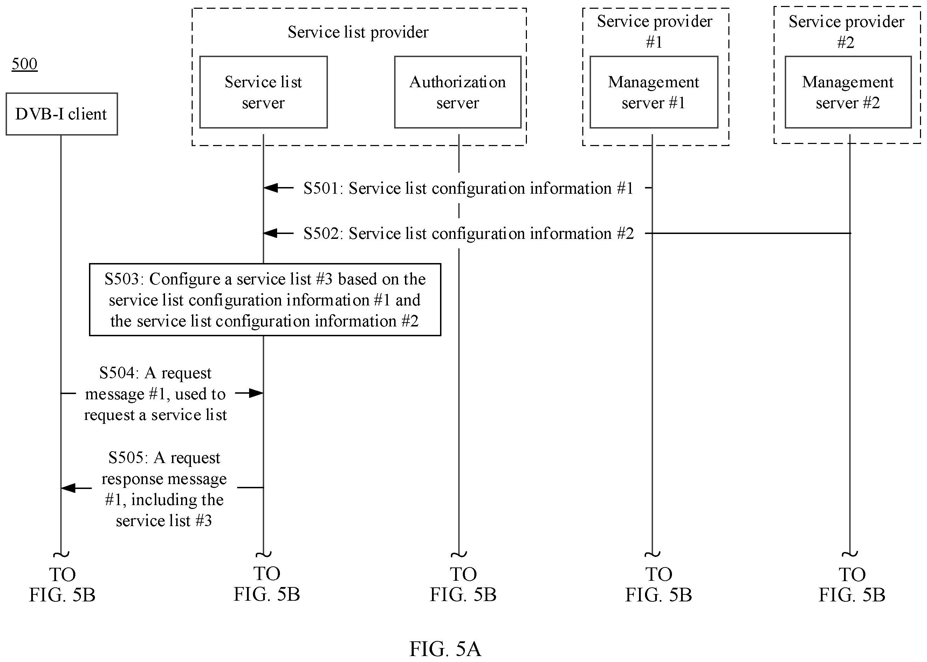

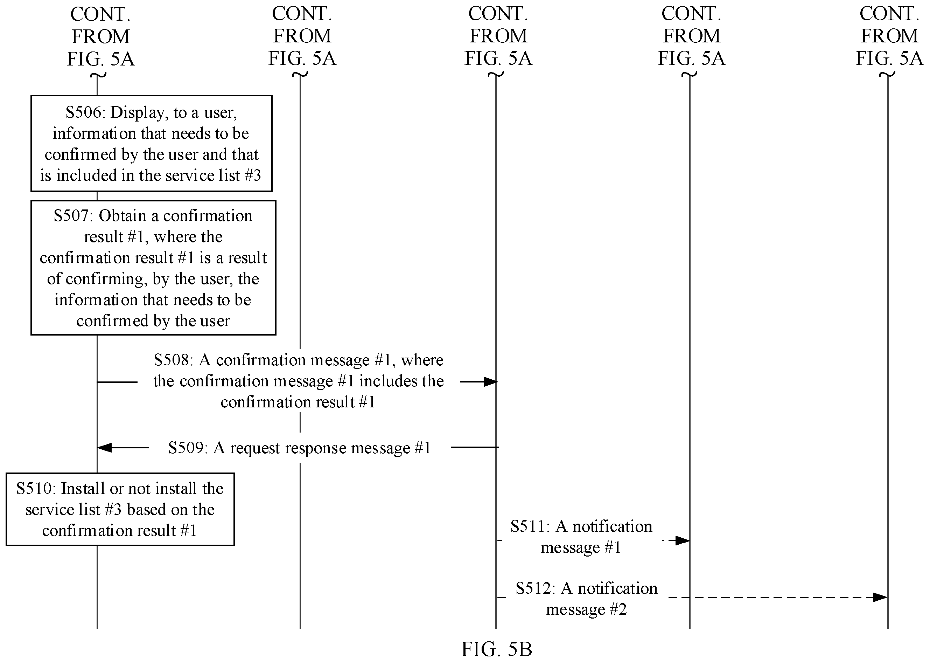

FIG. 5A and FIG. 5B are a schematic flowchart of a service list installation method 500 according to an embodiment of this application. In this solution, an example in which the service list server obtains the service list configuration information from management servers of two service providers, and the first information included in the service list configuration information is information that needs to be confirmed by the user during installation of a service list is used for description. The method includes the following steps.

S501: The service list server receives service list configuration information #1 from a management server #1 of a service provider #1.

The service list configuration information #1 includes a service list #1 provided by the service provider #1, information #1 that needs to be confirmed by the user, and an address #1 of the service provider #1, where the service list #1 includes service information of at least one service.

For example, the service list configuration information #1 may be manually configured offline by the service provider, or may be determined by the management server #1 through interaction with the service list server.

Optionally, the service list configuration information #1 may alternatively not include the information #1 that needs to be confirmed by the user, and the information #1 that needs to be confirmed by the user may be determined by the service list server based on the service list #1 in S503.

For example, the service list configuration information #1 further includes an application scope of the information #1 that needs to be confirmed by the user. For the application scope, refer to the descriptions in S401. Details are not described herein again. In the following descriptions, an example in which the application scope of the information #1 that needs to be confirmed by the user is all services in the service list #1 is used for description.

For example, the service list #1 includes service information of a service #1 and a service #2, the information #1 that needs to be confirmed by the user is "Term (1): Do you agree that personal data is processed based on the definition in the GDPR", the address of the service provider #1 is URI 1, and the application scope is all the services in the service list #1 (in Table 1, a service ID indicates a service in the application scope). In this case, a structure of a service list A corresponding to the service list configuration information #1 is shown in Table 1.

**Table 1**

| Service list A | |
|---|---|
| Service provider name: service provider #1 | |
| Confirmation document | Term (1): Do you agree that personal data is processed based on the definition in the GDPR? |
| | Application scope: service ID 1, service ID 2 |
| | Confirmation address: URI 1 |
| Service information of service #1 | Service ID 1 |
| | Service name 1 |
| | LCN 1 |
| | Service type 1 |
| | Service instance 1 |
| Service information of service #2 | Service ID 2 |
| | Service name 2 |
| | LCN 2 |
| | Service type 2 |
| | Service instance 2 |

It may be understood that, the service list server may synchronize the received service list configuration information #1 to the authorization server.

S502: The service list server receives service list configuration information #2 from a management server #2 of a service provider #2.

Optionally, the service list configuration information #2 includes a service list #2 provided by the service provider #2, information #2 that needs to be confirmed by the user, and an address #2 of the service provider #2, where the service list #2 includes service information of at least one service. The description of S502 is similar to that of S501, and details are not described herein again.

For example, the service list configuration information #2 further includes an application scope of the information #2 that needs to be confirmed by the user. For the application scope, refer to the descriptions in S401. Details are not described herein again. In the following descriptions, an example in which the application scope of the information #2 that needs to be confirmed by the user is all services in the service list #2 is used for description.

For example, the service list #2 includes service information of a service #3 and a service #4, the information #2 that needs to be confirmed by the user is "Term (1): Do you agree that personal data is processed based on the definition in the GDPR", the address of the service provider #2 is URI 2, and the application scope is all services in the service list #2. In this case, a structure of a service list B corresponding to the service list configuration information #2 is shown in Table 2.

**Table 2**

| Service list B | |
|---|---|
| Service provider name: service provider #2 | |
| Confirmation document | Term (1): Do you agree that personal data is processed based on the definition in the GDPR? |
| | Application scope: service ID 3, service ID 4 |
| | Confirmation address: URI 2 |
| Service information of service #3 | Service ID 3 |
| | Service name 3 |
| | LCN 3 |
| | Service type 3 |
| | Service instance 3 |
| Service information of service #4 | Service ID 4 |
| | Service name 4 |
| | LCN 4 |
| | Service type 4 |
| | Service instance 4 |

It may be understood that, the service list server synchronizes the received service list configuration information #2 to the authorization server.

S503: The service list server configures a service list #3 based on the service list configuration information #1 and the service list configuration information #2.

The service list #3 (that is, an example of the first service list in the method 400) includes the service list #1 and the service list #2, the information #1 that needs to be confirmed by the user, the information #2 that needs to be confirmed by the user, and a destination address #3 for receiving a confirmation result (that is, an interaction result) of the information #1 that needs to be confirmed by the user and the information #2 that needs to be confirmed by the user.

It may be understood that, the service list #3 is subsequently sent to the DVB-I client, and the DVB-I client needs to feed back the confirmation result of the user to the authorization server. Therefore, the destination address #3 in the service list 3 is an address of the authorization server.

Table 1 and Table 2 are used as an example. In a possible implementation, the service list server may directly concatenate Table 1 and Table 2, and modify the confirmation addresses in Table 1 and Table 2 to the address URI 3 of the authorization server (that is, the confirmation address #3 is URI 3) to obtain the service list #3. A structure of the service list #3 obtained after concatenation is shown in Table 3.

**Table 3**

| Service list A | |
|---|---|
| Service provider name: service provider #1 | |
| Confirmation document | Term (1): Do you agree that personal data is processed based on the definition in the GDPR? |
| | Application scope: service ID 1, service ID 2 |
| | Confirmation address: URI 3 |
| Service information of service #1 | Service ID 1 |
| | Service name 1 |
| | LCN 1 |
| | Service type 1 |
| | Service instance 1 |
| Service information of service #2 | Service ID 2 |
| | Service name 2 |
| | LCN 2 |
| | Service type 2 |
| | Service instance 2 |

| Service list B | |
|---|---|
| Service provider name: service provider #2 | |
| Confirmation document | Term (1): Do you agree that personal data is processed based on the definition in the GDPR? |
| | Application scope: service ID 3, service ID 4 |
| | Confirmation address: URI 3 |
| Service information of service #3 | Service ID 3 |
| | Service name 3 |
| | LCN 3 |
| | Service type 3 |
| | Service instance 3 |
| Service information of service #4 | Service ID 4 |
| | Service name 4 |
| | LCN 4 |
| | Service type 4 |
| | Service instance 4 |

Table 1 and Table 2 are used as an example. In another possible implementation, the service list server may combine and concatenate same information that needs to be confirmed by the user in Table 1 and Table 2, and modify the confirmation address after combination to the address URI 3 of the authorization server, to obtain the service list #3. In this case, a structure of the service list #3 obtained after concatenation is shown in Table 4.

**Table 4**

| | |
|---|---|
| Confirmation document | Term (1): Do you agree that personal data is processed based on the definition in the GDPR? |
| | Applicable scope: service ID 1, service ID 2, service ID 3, and service ID 4 |
| | Confirmation address: URI 3 |

| Service list A | |
|---|---|
| Service provider name: service provider #1 | |
| Service information of service #1 | Service ID 1 |
| | Service name 1 |
| | LCN 1 |
| | Service type 1 |
| | Service instance 1 |
| Service information of service #2 | Service ID 2 |
| | Service name 2 |
| | LCN 2 |
| | Service type 2 |
| | Service instance 2 |

| Service list B | |
|---|---|
| Service provider name: service provider #2 | |
| Service information of service #3 | Service ID 3 |
| | Service name 3 |
| | LCN 3 |
| | Service type 3 |
| | Service instance 3 |
| Service information of service #4 | Service ID 4 |
| | Service name 4 |
| | LCN 4 |
| | Service type 4 |
| | Service instance 4 |

S504: The DVB-I client sends a request message #1 to the service list server, where the request message #1 is used to request a service list. Correspondingly, the service list server receives the request message #1 from the DVB-I client.

Optionally, the DVB-I client requests the service list from the service list server based on a configuration. For example, the configuration may be that the service list is periodically obtained, or the service list is obtained upon first startup, or a location of the terminal or a language changes.

S505: The service list server sends a request response message #1 to the DVB-I client, where the request response message #1 includes the service list #3. Correspondingly, the DVB-I client receives the request response message #1 from the service list server.

S506: The DVB-I client displays, to the user, information that needs to be confirmed by the user and that is included in the service list #3.

For example, the service list #3 obtained by the DVB-I client is shown in Table 3 or Table 4. In this case, the DVB-I client displays, to the user, "Do you agree that personal data is processed in the following services based on the definition in the GDPR: the service #1, the service #2, the service #3, and the service #4" on a screen.

S507: The DVB-I client obtains a confirmation result #1 (which may also be referred to as an interaction result #1) from the user, where the confirmation result #1 is a result of confirming, by the user, the information that needs to be confirmed by the user (that is, the information #1 that needs to be confirmed by the user and the information #2 that needs to be confirmed by the user).

S508: The DVB-I client sends a confirmation message #1 to the authorization server, where the confirmation message #1 includes the confirmation result #1. Correspondingly, the authorization server receives the confirmation message #1 from the DVB-I client.

S509: The authorization server sends a confirmation response message #1 to the DVB-I client. Correspondingly, the DVB-I client receives the confirmation response message #1 from the authorization server.

Optionally, if the user agrees to the information #1 that needs to be confirmed by the user, the confirmation response message #1 includes a confirmation identifier #1, where the confirmation identifier #1 is used by the DVB-I client to subsequently access a service that is provided by the service provider #1. If the user agrees to the information #2 that needs to be confirmed by the user, the confirmation response message #1 includes a confirmation identifier #2, where the confirmation identifier #2 is used by the DVB-I client to subsequently access a service that is provided by the service provider #2.

S510: The DVB-I client installs or does not install the service list #3 based on the confirmation result #1.

For example, the service list #3 obtained by the DVB-I client is shown in Table 4. If the confirmation result #1 indicates that the user agrees to the term (1), the DVB-I client installs the service list #3; or if the confirmation result #1 indicates that the user does not agree to the term (1), the DVB-I client does not install the service list #3.

Optionally, if the user agrees to the information #1 that needs to be confirmed by the user, the DVB-I client displays service information of a service in the service list #1 to the user; or if the user agrees to the information #2 that needs to be confirmed by the user, the DVB-I client displays service information of a service in the service list #2 to the user.

Optionally, when displaying the service information of the service in the service list #1 to the user, the DVB-I client may further display the information #1 that needs to be confirmed by the user to the user; and when displaying the service information of the service in the service list #2 to the user, the DVB-I client may further display the information #2 that needs to be confirmed by the user to the user.

Optionally, if the user agrees to the information #1 that needs to be confirmed by the user, the method further includes:
S511: The authorization server sends a notification message #1 to the management server #1 of the service provider #1, where the notification message #1 includes the confirmation identifier #1. Correspondingly, the management server #1 of the service provider #1 receives the notification message #1 from the authorization server.

Optionally, if the user agrees to the information #2 that needs to be confirmed by the user, the method further includes:
S512: The authorization server sends a notification message #2 to the management server #2 of the service provider #2, where the notification message #2 includes the confirmation identifier #2. Correspondingly, the management server #2 of the service provider #2 receives the notification message #2 from the authorization server.

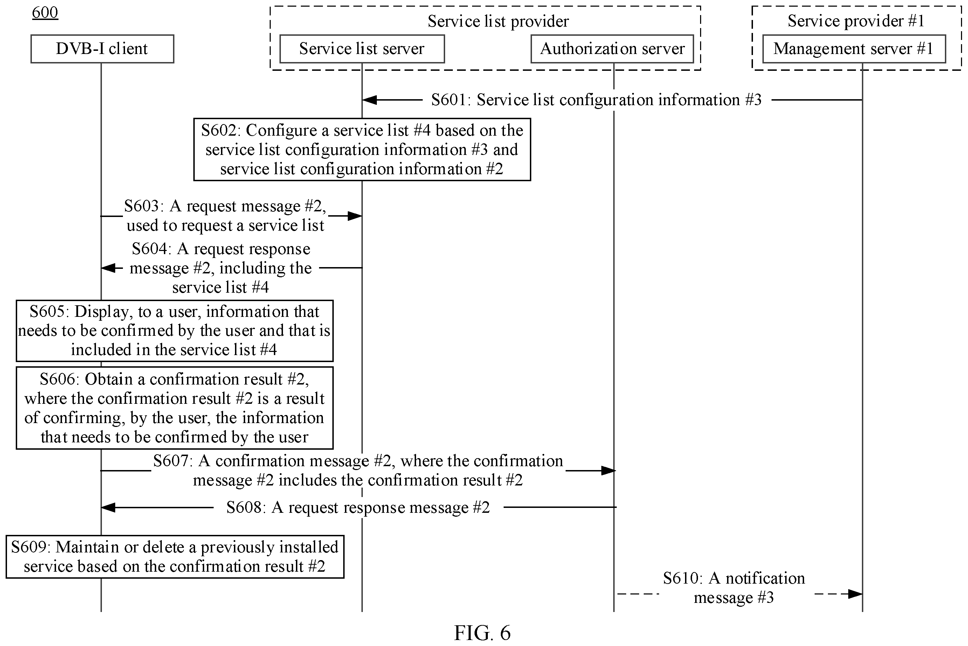

Based on the method 500, in a possible scenario, after a period of time following completion of installation of all services in the service list #3, because information related to installation of the service list #3 changes, the service list server may further provide an updated service list to the DVB-I client. A scenario in which after a service provided by the service provider #1 (that is, a service in the service list #1) is installed, the corresponding information that needs to be confirmed by the user changes is used as an example for description herein. The following describes an update procedure with reference to FIG. 6.

S601: The service list server receives service list configuration information #3 from the management server #1 of the service provider #1.

The service list configuration information #3 includes the service list #1 provided by the service provider #1, information #3 that needs to be confirmed by the user, and the address #1 of the service provider #1, where the information #3 that needs to be confirmed by the user is information that needs to be confirmed by the user for installing a service in the service list #1 (that is, the information #3 that needs to be confirmed by the user is information obtained after the information #1 that needs to be confirmed by the user is updated). Other descriptions of the service list configuration information #3 are similar to those of the service list configuration information #1. Details are not described herein again.

For example, the service list #1 includes the service information of the service #1 and the service #2, and the information #3 that needs to be confirmed by the user is "Term (1): Do you agree that personal data is processed based on the definition in the GDPR; and Term (2): Do you agree that services are accessed only in the EU". The confirmation address #1 is the address URI 1 of the service provider #1, and the application scope is all the services in the service list #1 (in Table 3, a service ID indicates a service in the application scope). In this case, a structure of a service list C corresponding to the updated service list configuration information #3 is shown in Table 5.

**Table 5**

| Service list C | |
|---|---|
| Service provider name: service provider #1 | |
| Confirmation document | Term (1): Do you agree that personal data is processed based on the definition in the GDPR? |
| | Term (2): Do you agree that services are accessed only in the EU? |
| | Application scope: service ID 1, service ID 2 |
| | Confirmation address: URI 1 |
| Service information of service #1 | Service ID 1 |
| | Service name 1 |
| | LCN 1 |
| | Service type 1 |
| | Service instance 1 |
| Service information of service #2 | Service ID 2 |
| | Service name 2 |
| | LCN 2 |
| | Service type 2 |
| | Service instance 2 |

S602: The service list server configures a service list #4 based on the service list configuration information #3 and the service list configuration information #2.

The service list #4 (that is, an example of the second service list in the method 400) includes the service list #1 and the service list #2, the information #3 that needs to be confirmed by the user, the information #2 that needs to be confirmed by the user, and the confirmation address #3 for receiving the confirmation result of the information #1 that needs to be confirmed by the user and the information #2 that needs to be confirmed by the user, where the service list #1 includes service information of at least one service.

Optionally, in addition to the foregoing manner of obtaining the information #3 that needs to be confirmed by the user, the service list server may further determine the information #3 that needs to be confirmed by the user.

It may be understood that, the service list #4 is subsequently sent to the DVB-I client, and the DVB-I client needs to feed back the confirmation result of the user to the authorization server. Therefore, the address #3 in the service list 4 is the address of the authorization server.

Table 5 and Table 2 are used as an example. The service list server may directly concatenate Table 2 and Table 5, and modify the confirmation addresses in Table 2 and Table 5 to the address URI 3 of the authorization server (that is, the confirmation address #3 is URI 3) to obtain the service list #4. A structure of the service list #4 obtained after concatenation is shown in Table 6.

**Table 6**

| Service list C | |
|---|---|
| Service provider name: service provider #1 | |
| Confirmation document | Term (1): Do you agree that personal data is processed based on the definition in the GDPR? |
| | Term (2): Do you agree that services are accessed only in the EU? |
| | Application scope: service ID 1, service ID 2 |
| | Confirmation address: URI 3 |
| Service information of service #1 | Service ID 1 |
| | Service name 1 |
| | LCN 1 |
| | Service type 1 |
| | Service instance 1 |
| Service information of service #2 | Service ID 2 |
| | Service name 2 |
| | LCN 2 |
| | Service type 2 |
| | Service instance 2 |

| Service list B | |
|---|---|
| Service provider name: service provider #2 | |
| Confirmation document | Term (1): Do you agree that personal data is processed based on the definition in the GDPR? |
| | Application scope: service ID 3, service ID 4 |
| | Confirmation address: URI 3 |
| Service information of service #3 | Service ID 3 |
| | Service name 3 |
| | LCN 3 |
| | Service type 3 |
| | Service instance 3 |
| Service information of service #4 | Service ID 4 |
| | Service name 4 |
| | LCN 4 |
| | Service type 4 |
| | Service instance 4 |

S603: The DVB-I client sends a request message #2 to the service list server, where the request message #2 is used to request a service list. Correspondingly, the service list server receives the request message #2 from the DVB-I client.

Optionally, the DVB-I client requests the service list from the service list server based on a configuration. For example, the configuration may be obtaining the service list based on an update period.

S604: The service list server sends a request response message #2 to the DVB-I client, where the request response message #2 includes the service list #4. Correspondingly, the DVB-I client receives the request response message #2 from the service list server.

S605: The DVB-I client displays, to the user, information that needs to be confirmed by the user and that is included in the service list #4.

For example, the service list #4 obtained by the DVB-I client is shown in Table 6. In this case, the DVB-I client displays, to the user, "Do you agree that personal data is processed in the following services based on the definition in the GDPR and that services are accessed only in the EU: the service #1 and the service #2; and do you agree that personal data is processed in the following services based on the definition in the GDPR: the service #3 and the service #4".

S606: The DVB-I client obtains a confirmation result #2 (which may also be referred to as an interaction result #2) from the user, where the confirmation result #2 is a result of confirming, by the user, information that needs to be confirmed by the user (that is, the information #3 that needs to be confirmed by the user and the information #2 that needs to be confirmed by the user).

S607: The DVB-I client sends a confirmation message #2 to the authorization server, where the confirmation message #2 includes the confirmation result #2. Correspondingly, the authorization server receives the confirmation message #2 from the DVB-I client.

S608: The authorization server sends a confirmation response message #2 to the DVB-I client. Correspondingly, the DVB-I client receives the confirmation response message #2 from the authorization server.

Optionally, if the confirmation result #2 indicates that the user agrees that the information #3 that needs to be confirmed by the user is applied to a service that is provided by the service provider #1 and that is in the service list #4 (that is, a service in the service list #1), the confirmation response message #2 includes a confirmation identifier #3, where the confirmation identifier #3 is used by the DVB-I client to subsequently access the service that is provided by the service provider #1 and that is in the service list #4.

S609: The DVB-I client maintains or deletes a previously installed service based on the confirmation result #2.

Optionally, if the confirmation result #2 indicates that the user does not agree to the information #3 that needs to be confirmed by the user, the DVB-I client deletes a previously installed service in the service list #1.

Optionally, if the confirmation result #2 indicates that the user agrees to the information #3 that needs to be confirmed by the user, the DVB-I client displays service information of the service in the service list #1 to the user. Further, the information that needs to be confirmed by the user (that is, the information #3 that needs to be confirmed by the user), that is updated and to which the user has agreed, may be further displayed to the user.

Optionally, if the user agrees to the information #3 that needs to be confirmed by the user, the method further includes:
S610: The authorization server sends a notification message #3 to the management server #1 of the service provider #1, where the notification message #3 includes the confirmation identifier #3.

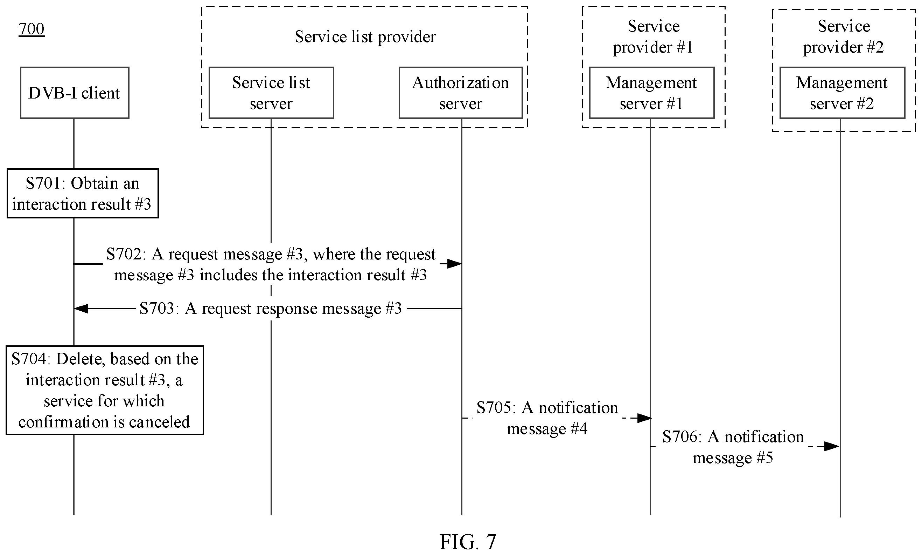

Based on the method 500, in a possible scenario, after a period of time following completion of installation of all the services in the service list #3, the user decides to cancel the previous confirmation result #1. The following describes the update procedure with reference to FIG. 7.

S701: The DVB-I client obtains an interaction result #3 from the user, where the interaction result #3 indicates that the user cancels the confirmation result #1.

For example, when the user decides to cancel the confirmation result #1, the user taps a related "cancel" button on the screen.

S702: The DVB-I client sends a request message #3 to the authorization server, where the request message #3 includes the interaction result #3. Correspondingly, the authorization server receives the request message #3 from the DVB-I client.

Optionally, the request message #3 includes a cancellation scope. For the cancellation scope, refer to the description of S413. Details are not described herein again.

S703: The authorization server sends a request response message #3 to the DVB-I client. Correspondingly, the DVB-I client receives the request response message #3 from the authorization server.

S704: The DVB-I client deletes, based on the interaction result #3, a service for which confirmation is canceled.

S705: The authorization server sends a notification message #4 to the management server #1 of the service provider #1, where the notification message #4 indicates that the user cancels confirmation of a service in the service list #1. Correspondingly, the management server #1 of the service provider #1 receives the notification message #4 from the authorization server.

It may be understood that, the authorization server indicates the user to cancel the confirmation of the service in the service list #1, that is, indicates to cancel a confirmation identifier previously allocated to the service in the service list #1.

S706: The authorization server sends a notification message #5 to the management server #2 of the service provider #2, where the notification message #5 indicates that the user cancels confirmation of a service in the service list #2. Correspondingly, the management server #2 of the service provider #2 receives the notification message #5 from the authorization server.

It may be understood that, the authorization server indicates the user to cancel the confirmation of the service in the service list #2, that is, indicates to cancel a confirmation identifier previously allocated to the service in the service list #1.

Solution 2: This solution is based on the architecture shown in FIG. 3. The service list server obtains service list configuration information from one or more service providers, where the service list configuration information includes service information and the foregoing first information (refer to the descriptions in S401). The service list server may configure, based on the obtained service list configuration information, a service list that includes the corresponding first information and that is sent to the terminal device. In this solution, the DVB-I client does not depend on a linked application, and the DVB-I client natively supports interaction with the user and the service provider. The following describes the solution in detail.

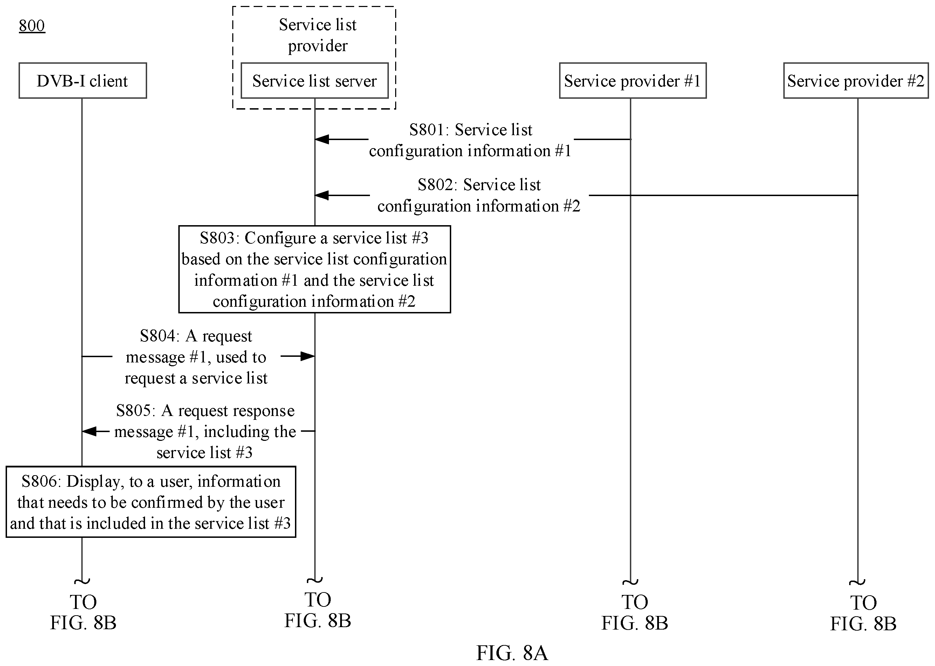

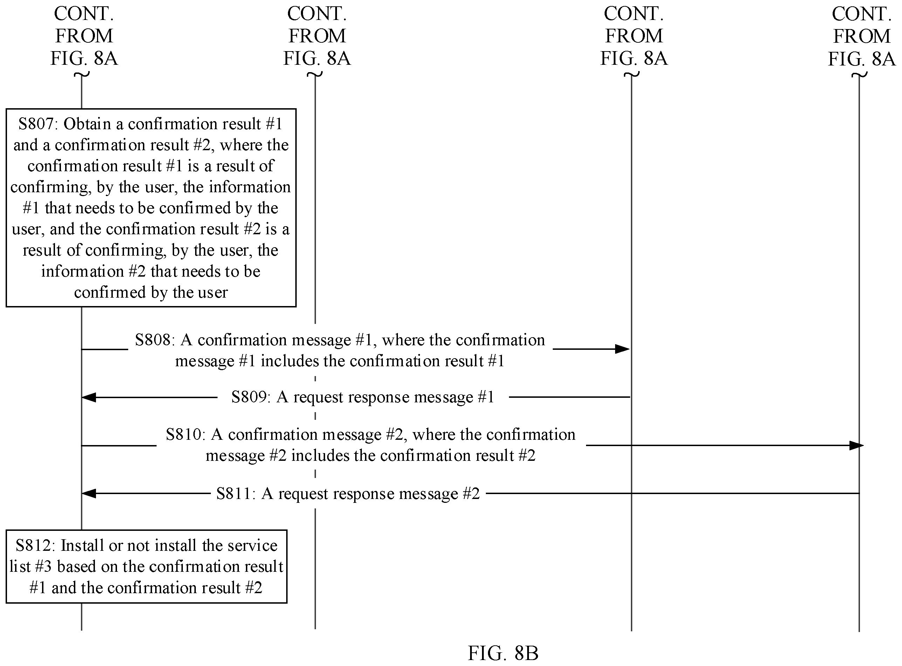

FIG. 8A and FIG. 8B are a schematic flowchart of a service list installation method 800 according to an embodiment of this application. For ease of description, in this solution, an example in which the service list server obtains the service list configuration information from management servers of two service providers, and the first information included in the service list configuration information is information that needs to be confirmed by the user during installation of a service list is used for description. It may be understood that, a main difference between the method 800 and the method 500 lies in that, in the method 500, the DVB-I client exchanges a confirmation result of the user with the authorization server at a side of the service list provider, while in the method 800, the DVB-I client exchanges a confirmation result of the user with the service provider. The method includes the following steps.

For S801 to S806 shown in FIG. 8A, refer to the descriptions of S501 to S506 in FIG. 5A and FIG. 5B. Details are not described herein again. However, it should be noted that, compared with S504, the request message #1 in S804 includes the address of the service provider #1 (for example, URI 1 in S501) and the address of the service provider #2 (for example, URI 2 in S502).

S807: The DVB-I client obtains a confirmation result #1 (which may also be referred to as an interaction result #1) and a confirmation result #2 (which may also be referred to as an interaction result #2) from the user.

The confirmation result #1 is a result of confirming, by the user, the information #1 that needs to be confirmed by the user, and the confirmation result #2 is a result of confirming, by the user, the information #2 that needs to be confirmed by the user.

S808: The DVB-I client sends a confirmation message #1 to the service provider #1, where the confirmation message #1 includes the confirmation result #1. Correspondingly, the service provider #1 receives the confirmation message #1 from the DVB-I client.

S809: The service provider #1 sends a confirmation response message #1 to the DVB-I client. Correspondingly, the DVB-I client receives the confirmation response message #1 from the service provider #1.

Optionally, if the user agrees to the information #1 that needs to be confirmed by the user, the confirmation response message #1 includes a confirmation identifier #1, where the confirmation identifier #1 is used by the DVB-I client to subsequently access a service that is provided by the service provider #1.

S810: The DVB-I client sends a confirmation message #2 to the service provider #2, where the confirmation message #2 includes the confirmation result #2. Correspondingly, the service provider #2 receives the confirmation message #2 from the DVB-I client.

S811: The service provider #2 sends a confirmation response message #2 to the DVB-I client. Correspondingly, the DVB-I client receives the confirmation response message #2 from the service provider #2.

Optionally, if the user agrees to the information #2 that needs to be confirmed by the user, the confirmation response message #1 includes a confirmation identifier #2, where the confirmation identifier #2 is used by the DVB-I client to subsequently access a service that is provided by the service provider #1.

S812: The DVB-I client installs or does not install the service list #3 based on the confirmation result #1 and the confirmation result #2. For details, refer to the descriptions of S510 in FIG. 5B. Details are not described herein again.

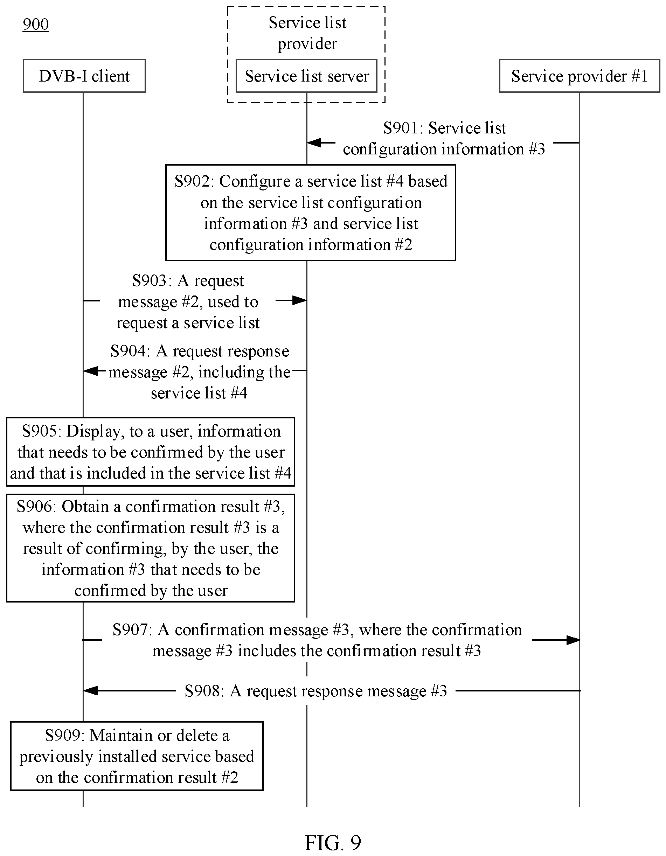

Based on the method 800, in a possible scenario, after a period of time following completion of installation of all services in the service list #3, because information related to installation of the service list #3 changes, the service list server may further provide an updated service list to the DVB-I client. A scenario in which after a service provided by the service provider #1 (that is, a service in the service list #1) is installed, the corresponding information that needs to be confirmed by the user changes is used as an example for description herein. The following describes an update procedure with reference to FIG. 9.

For S901 to S906 shown in FIG. 9, refer to the descriptions of S601 to S605 in FIG. 6. Details are not described herein again.

S906: The DVB-I client obtains a confirmation result #3 (which may also be referred to as an interaction result #3), where the confirmation result #3 is a result of confirming, by the user, information that needs to be confirmed by the user (that is, the information #3 that needs to be confirmed by the user and the information #2 that needs to be confirmed by the user).

S907: The DVB-I client sends a confirmation message #3 to the service provider #1, where the confirmation message #3 includes the confirmation result #3. Correspondingly, the service provider #1 receives the confirmation message #3 from the DVB-I client.

S908: The service provider #1 sends a confirmation response message #3 to the DVB-I client. Correspondingly, the DVB-I client receives the confirmation response message #3 from the service provider #1.

Optionally, if the confirmation result #3 indicates that the user agrees that the information #3 that needs to be confirmed by the user is applied to a service that is provided by the service provider #1 and that is in the service list #4 (that is, a service in the service list #1), the confirmation response message #3 includes a confirmation identifier #3, where the confirmation identifier #3 is used by the DVB-I client to subsequently access the service that is provided by the service provider #1 and that is in the service list #4.

S909: The DVB-I client maintains or deletes a previously installed service based on the confirmation result #3.

Optionally, if the confirmation result #3 indicates that the user does not agree to the information #3 that needs to be confirmed by the user, the DVB-I client deletes a previously installed service in the service list #1.

Optionally, if the confirmation result #3 indicates that the user agrees to the information #3 that needs to be confirmed by the user, the DVB-I client displays service information of the service in the service list #1 to the user. Further, the information that needs to be confirmed by the user (that is, the information #3 that needs to be confirmed by the user), that is updated and to which the user has agreed, may be further displayed to the user.

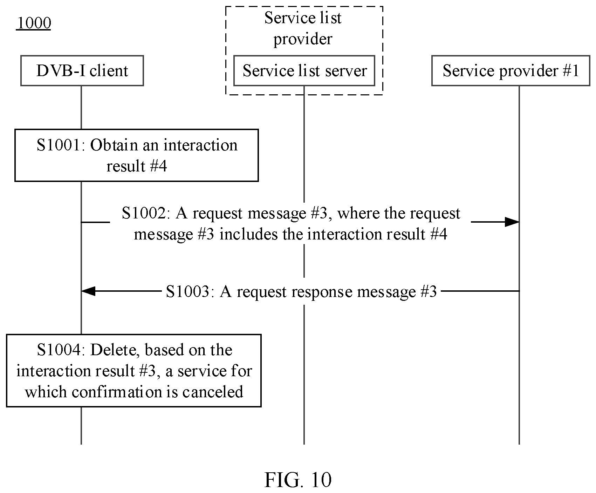

Based on the method 800, in a possible scenario, after a period of time following completion of installation of all the services in the service list #3, the user decides to cancel the previous confirmation result #1 and/or confirmation result #2. With reference to FIG. 10, the following describes a cancellation procedure by using an example in which the user cancels the confirmation result #1.

S1001: The DVB-I client receives an interaction result #4 from the user, where the interaction result #4 indicates that the user cancels the confirmation result #1.

For example, when the user decides to cancel the confirmation result #1, the user taps a related "cancel" button on the screen.

S1002: The DVB-I client sends a request message #3 to the service provider #1, where the request message #3 includes the interaction result #4. Correspondingly, the authorization server receives the request message #3 from the DVB-I client.

Optionally, the request message #3 includes a cancellation scope. For the cancellation scope, refer to the description of S413. Details are not described herein again.

S1003: The authorization server sends a request response message #3 to the service provider #1. Correspondingly, the DVB-I client receives the request response message #3 from the authorization server.

S1004: The DVB-I client deletes, based on the interaction result #3, a service for which confirmation is canceled.

Solution 3: This solution is based on the architecture shown in FIG. 2. The service list server obtains service list configuration information from one or more service providers, where the service list configuration information includes service information and the foregoing first information (refer to the descriptions in S401). The service list server may configure, based on the obtained service list configuration information, a service list that includes the corresponding first information, and send the service list to the terminal device. In this solution, the DVB-I client depends on a linked application to interact with the user and the authorization server. The following describes the solution in detail.

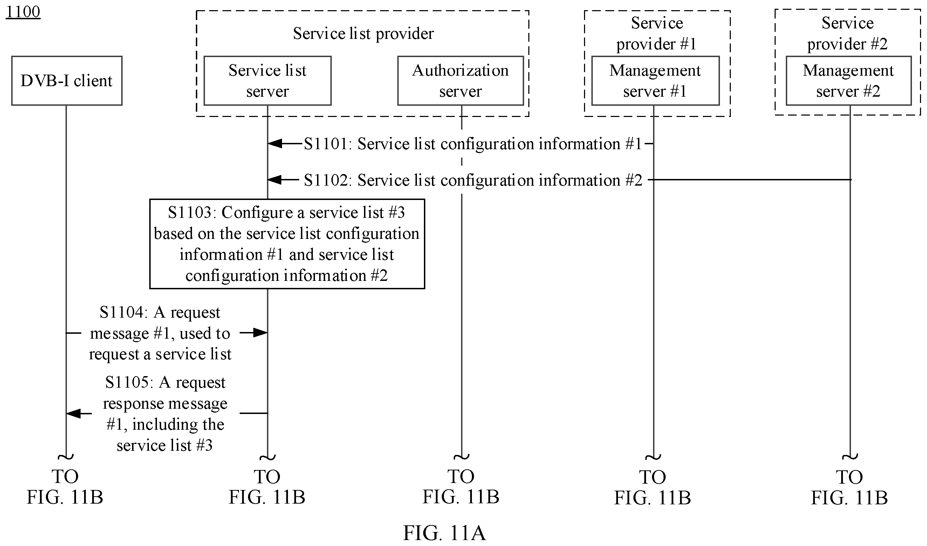

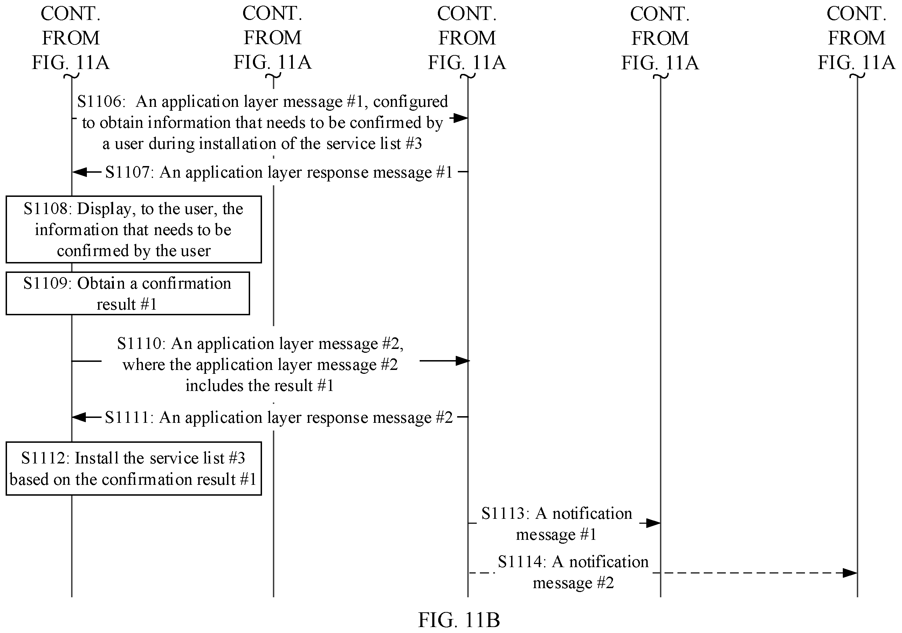

FIG. 11A and FIG. 11B are a schematic flowchart of a service list installation method 1100 according to an embodiment of this application. For ease of description, in this solution, an example in which the service list server obtains the service list configuration information from management servers of two service providers, and the first information included in the service list configuration information is information that needs to be confirmed by the user during installation of a service list is used for description. The method includes the following steps.

S1101: The service list server receives service list configuration information #1 from a management server #1 of a service provider #1.

The service list configuration information #1 includes a service list #1 provided by the service provider #1, information #1 that needs to be confirmed by the user, and an address #1 of the service provider #1, where the service list #1 includes service information of at least one service.

For example, the service list configuration information #1 may be manually configured offline by the service provider, or may be determined by the management server #1 through interaction with the service list server.

For example, the service list configuration information #1 further includes an application scope of the information #1 that needs to be confirmed by the user. For the application scope, refer to the descriptions in S401. Details are not described herein again. In the following descriptions, an example in which the application scope of the information #1 that needs to be confirmed by the user is all services in the service list #1 is used for description.

For example, the service list #1 includes service information of a service #1 and a service #2, the information #1 that needs to be confirmed by the user is "Term: Do you agree that personal data is processed based on the definition in the GDPR", the address #1 of the service provider #1 is URI 1, and the application scope is all the services in the service list #1 (in Table 7, a service ID indicates a service in the application scope). In this case, a structure of a service list D corresponding to the service list configuration information #1 is shown in Table 7.

**Table 7**

| Service list D | |
|---|---|
| Service provider name: service provider #1 | |
| Confirmation document | Term: Do you agree that personal data is processed based on the definition in the GDPR? |
| | Application scope: service ID 1, service ID 2 |
| | Confirmation address: URI 1 |
| Service information of service #1 | Service ID 1 |
| | Service name 1 |
| | LCN 1 |
| | Service type 1 |
| | Service instance 1 |
| Service information of service #2 | Service ID 2 |
| | Service name 2 |
| | LCN 2 |
| | Service type 2 |
| | Service instance 2 |

It may be understood that, the service list server may synchronize the received service list configuration information #1 to the authorization server.

S1102: The service list server receives service list configuration information #2 from a management server #2 of a service provider #2.

Optionally, the service list configuration information #2 includes a service list #2 provided by the service provider #2, information #2 that needs to be confirmed by the user, and an address #2 of the service provider #2, where the service list #2 includes service information of at least one service. The description of S1102 is similar to that of S1101, and details are not described herein again.

For example, the service list configuration information #2 further includes an application scope of the information #2 that needs to be confirmed by the user. In the following descriptions, an example in which the application scope of the information #2 that needs to be confirmed by the user is all services in the service list #2 is used for description.

For example, the service list #2 includes service information of a service #3 and a service #4, the information #2 that needs to be confirmed by the user is "Term: Do you agree that services are accessed only in the EU", the address #2 of the service provider #2 is URI 2, and the application scope is all the services in the service list #2 (in Table 8, a service ID indicates a service in the application scope). In this case, a structure of a service list E corresponding to the service list configuration information #2 is shown in Table 8.

**Table 8**

| Service list E | |
|---|---|
| Service provider name: service provider #2 | |
| Confirmation document | Term (1): Do you agree that personal data is processed based on the definition in the GDPR? |
| | Application scope: service ID 3, service ID 4 |
| | Confirmation address: URI 2 |
| Service information of service #3 | Service ID 3 |
| | Service name 3 |
| | LCN 3 |
| | Service type 3 |
| | Service instance 3 |
| Service information of service #4 | Service ID 4 |
| | Service name 4 |
| | LCN 4 |
| | Service type 4 |
| | Service instance 4 |

It may be understood that, the service list server may synchronize the received service list configuration information #1 to the authorization server.

S1103: The service list server configures a service list #3 based on the service list configuration information #1 and the service list configuration information #2.

The service list #3 includes the service list #1, the service list #2, and information about a linked application. The linked application is used to interact with the user obtain an interaction result #1 when the DVB-I client installs the service list.

It may be understood that, the interaction result #1 is used to determine whether the user agrees to install the service list.

Optionally, the information about the linked application includes at least one of the following: an identifier of the linked application, a type of the linked application, a launch condition of the linked application, and a life cycle of the linked application. For example, it is specified that a linked application type of linked applications whose identifiers are 50 to 100 is an agreement/authorization application that needs to be used during installation of the service list. For other descriptions, refer to the descriptions in S401. Details are not described herein again.

For example, the service list configuration information #1 and the service list configuration information #2 respectively correspond to Table 7 and Table 8, and the information about the linked application includes the identifier of the linked application (for example, the identifier of the linked application is 60), the launch condition of the linked application (for example, when the service list #3 is installed), and the life cycle (for example, one week) of the linked application. In this case, a structure of the service list #3 configured by the service list server is shown in Table 9.

**Table 9**

| | |
|---|---|
| Information about the linked application | Identifier: 60 |
| | Launch condition: during installation of the service list #3 |
| | Life cycle: one week |

| Service provider name: service provider #1 | |
|---|---|
| Service information of service #1 | Service ID 1 |
| | Service name 1 |
| | LCN 1 |
| | Service type 1 |
| | Service instance 1 |
| Service information of service #2 | Service ID 2 |
| | Service name 2 |
| | LCN 2 |
| | Service type 2 |
| | Service instance 2 |

| Service provider name: service provider #2 | |
|---|---|
| Service information of service #3 | Service ID 3 |
| | Service name 3 |
| | LCN 3 |
| | Service type 3 |
| | Service instance 3 |
| Service information of service #4 | Service ID 4 |
| | Service name 4 |
| | LCN 4 |
| | Service type 4 |
| | Service instance 4 |

S1104: The DVB-I client sends a request message #1 to the service list server, where the request message #1 is used to request a service list. Correspondingly, the service list server receives the request message #1 from the DVB-I client.

Optionally, the DVB-I client requests the service list from the service list server based on a configuration. For example, the configuration may be that the service list is periodically obtained, or the service list is obtained upon first startup, or a location of the terminal or a language setting of the DVB-I client changes.

S1105: The service list server sends a request response message #1 to the DVB-I client, where the request response message #1 includes the service list #3. Correspondingly, the DVB-I client receives the request response message #1 from the service list server.

S1106: The DVB-I client activates the linked application, and sends an application layer message #1 to the authorization server through the linked application, where the application layer message is used to request to obtain information that needs to be confirmed by the user during installation of the service list #3. Correspondingly, the authorization server receives the application layer message #1 from the DVB-I client.

S1107: The authorization server sends an application layer response message #1 to the linked application of the DVB-I client, where the application layer response message #1 includes the information #1 that needs to be confirmed by the user and the information #2 that needs to be confirmed by the user during installation of the service list #3. Correspondingly, the DVB-I client receives the application layer response message #1 from the authorization server.

S1108: The DVB-I client displays, to the user, the information that needs to be confirmed by the user.

For example, the information #1 that needs to be confirmed by the user is "Do you agree that personal data is processed based on the definition in the GDPR", and the application scope is all the services in the service list #1; and the information #2 that needs to be confirmed by the user is "Do you agree that personal data is processed based on the definition in the GDPR", and the application scope is all the services in the service list #1. In this case, the DVB-I client displays, to the user, "Do you agree that personal data is processed in the following services based on the definition in the GDPR: the service #1, the service #2, the service #3, and the service #4".

S1109: The DVB-I client receives a confirmation result #1 (which may also be referred to as an interaction result #1) from the user, where the confirmation result #1 is a result of confirming, by the user, the information that needs to be confirmed by the user (that is, the information #1 that needs to be confirmed by the user and the information #2 that needs to be confirmed by the user).

S1110: The DVB-I client sends an application layer message #2 to the authorization server through the linked application, where the application layer message #2 includes the confirmation result #1. Correspondingly, the authorization server receives the application layer message #2 from the DVB-I client.

S1111: The authorization server sends an application layer response message #2 to the linked application of the DVB-I client. Correspondingly, the DVB-I client receives the application layer response message #2 from the authorization server.

Optionally, if the user agrees to the information #1 that needs to be confirmed by the user, the confirmation response message #2 includes a confirmation identifier #1, where the confirmation identifier #1 is used by the DVB-I client to subsequently access a service that is provided by the service provider #1. If the user agrees to the information #2 that needs to be confirmed by the user, the confirmation response message #1 includes a confirmation identifier #2, where the confirmation identifier #2 is used by the DVB-I client to subsequently access a service that is provided by the service provider #2.

S1112: The DVB-I client installs or does not install the service list #3 based on the confirmation result #1.

If the confirmation result #1 indicates that the user agrees that the information #1 that needs to be confirmed by the user is applied to the service #1 and the service #2, and agrees that the information # that needs to be confirmed by the user is applied to the service #3 and the service #4, the DVB-I client installs the service list #3. If the confirmation result #1 indicates that the user agrees that the information #1 that needs to be confirmed by the user is applied to the service #1 and the service #2 in the service list #1, and the user does not agree that the information #2 that needs to be confirmed by the user is applied to the service #3 and the service #4, the DVB-I client installs only the service #1 and the service #2 in the list #3. If the confirmation result #1 indicates that the user does not agree that the information #1 that needs to be confirmed by the user is applied to the service #1 and the service #2 in the service list #1, and the user agrees that the information #2 that needs to be confirmed by the user is applied to the service #3 and the service #4, the DVB-I client installs only the service #3 and the service #4 in the list #3.

Optionally, if the user agrees to the information #1 that needs to be confirmed by the user, the DVB-I client displays service information of a service in the service list #1 to the user; or if the user agrees to the information #2 that needs to be confirmed by the user, the DVB-I client displays service information of a service in the service list #2 to the user.

Optionally, when displaying the service information of the service in the service list #1 to the user, the DVB-I client may further display the information #1 that needs to be confirmed by the user to the user; and when displaying the service information of the service in the service list #2 to the user, the DVB-I client may further display the information #2 that needs to be confirmed by the user to the user.

Optionally, if the user agrees to the information #1 that needs to be confirmed by the user, the method further includes:
S1113: The authorization server sends a notification message #1 to the management server #1 of the service provider #1, where the notification message #1 includes the confirmation identifier #1. Correspondingly, the management server #1 of the service provider #1 receives the notification message #1 from the authorization server.

Optionally, if the user agrees to the information #2 that needs to be confirmed by the user, the method further includes:
S1114: The authorization server sends a notification message #2 to the management server #2 of the service provider #2, where the notification message #2 includes the confirmation identifier #2. Correspondingly, the management server #2 of the service provider #2 receives the notification message #2 from the authorization server.

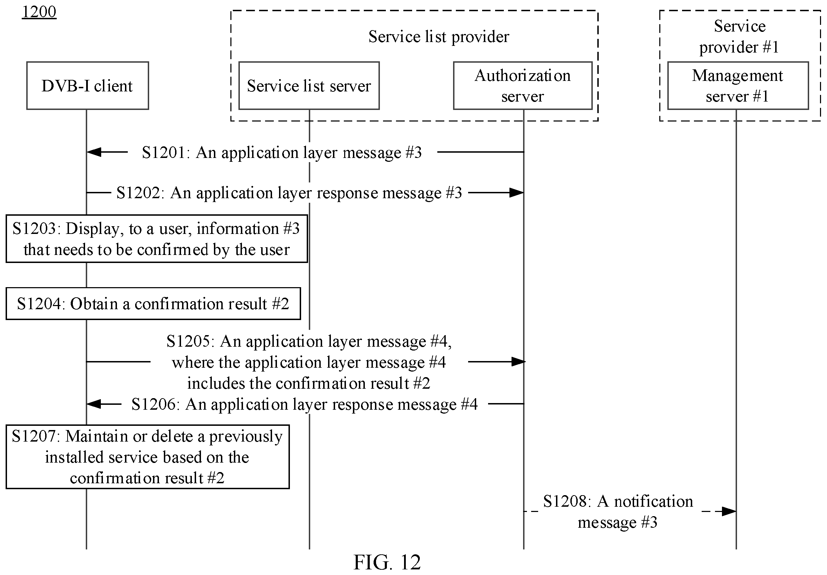

Based on the method 1100, in a possible scenario, after a period of time following completion of installation of all services in the service list #3, because information related to installation of the service list #3 changes, the authorization server may directly provide updated information related to installation of the service list #3 to the DVB-I client. A scenario in which after a service provided by the service provider #1 (that is, a service in the service list #1) is installed, the corresponding information that needs to be confirmed by the user changes is used as an example for description herein. The following describes an update procedure with reference to FIG. 12.

S1201: The authorization server sends an application layer message #3 to the linked application of the DVB-I client, where the application layer message #3 includes information #3 that needs to be confirmed by the user, and the information #3 that needs to be confirmed by the user is update information that needs to be confirmed by the user for maintaining an installed service that is provided by the service provider #1 and that is in the service list #3. Correspondingly, the linked application #1 of the DVB-I client receives the application layer message #3 from the authorization server.

For example, the information #1 that needs to be confirmed by the user before the update is "Term (1): Do you agree that personal data is processed based on the definition in the GDPR", and the application scope is all the services in the service list #1; and the updated information #3 that needs to be confirmed by the user is "Term (1): Do you agree that personal data is processed based on the definition in the GDPR; and Term (2): Do you agree that services are accessed only in the EU", and the application scope is all the services in the service list #1.

Optionally, the information #3 that needs to be confirmed by the user may be sent by the service provider #1 to the service list server, and then the service list server synchronizes the information #3 that needs to be confirmed by the user to the authorization server. For the descriptions provided by the service provider #1, refer to the descriptions in S601. Details are not described herein again.

Optionally, the service list server may determine the information #3 that needs to be confirmed by the user, and then synchronize the information #3 to the authorization server.

S1202: The linked application of the DVB-I client sends an application layer response message #3 to the authorization server. Correspondingly, the authorization server receives the application layer response message #3 from the linked application of the DVB-I client.

S1203: The DVB-I client displays, to the user, the information #3 that needs to be confirmed by the user.

Based on the example in S1201, the DVB-I client displays, to the user, "Do you agree that personal data is processed in the following services based on the definition in the GDPR and do you agree that services are accessed only in the EU: service #1 and service #2".

S1204: The DVB-I client obtains a confirmation result #2 (which may also be referred to as an interaction result #2) from the user, where the confirmation result #2 is a result of confirming, by the user, the information #3 that needs to be confirmed by the user.

S1205: The linked application of the DVB-I client sends an application layer message #4 to the authorization server, where the application layer message #4 includes the confirmation result #2. Correspondingly, the authorization server receives the application layer message #4 from the linked application #1 of the DVB-I client.

S1206: The authorization server sends an application layer response message #4 to the linked application of the DVB-I client. Correspondingly, the linked application #1 of the DVB-I client receives the application layer response message #4 from the authorization server.

Optionally, if the confirmation result #2 indicates that the user agrees to the information #3 that needs to be confirmed by the user, the confirmation response message #2 includes a confirmation identifier #3, where the confirmation identifier #3 is used by the DVB-I client to subsequently access the service that is provided by the service provider #1 and that is in the service list #3.

S1207: The DVB-I client maintains or deletes a previously installed service based on the confirmation result #2.

Optionally, if the user agrees to the information #3 that needs to be confirmed by the user, the method further includes:
S1208: The authorization server sends a notification message #3 to the management server #1 of the service provider #1, where the notification message #3 includes the confirmation identifier #3.

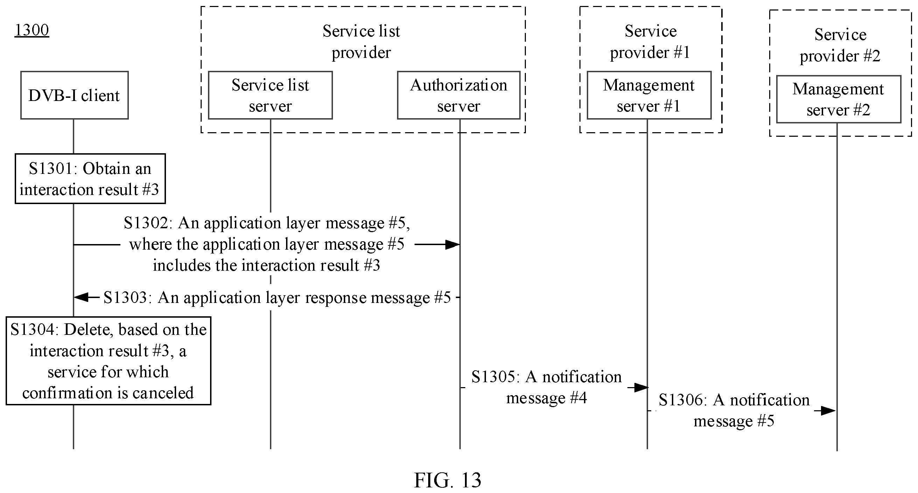

Based on the method 1100, in a possible scenario, after a period of time following completion of installation of all the services in the service list #3, the user decides to cancel the previous confirmation result #1. The following describes the update procedure with reference to FIG. 13.

S1301: The DVB-I client obtains an interaction result #3 from the user, where the interaction result #3 indicates that the user cancels the confirmation result #1.

S1302: The linked application of the DVB-I client sends an application layer message #5 to the authorization server, where the application layer message #5 includes the interaction result #3. Correspondingly, the authorization server receives the application layer message #5 from the linked application of the DVB-I client.

Optionally, the application layer message #5 includes an application scope of a cancellation indication. An indication manner of the application scope of the cancellation indication is similar to that of the application scope of the information that needs to be confirmed by the user in S401. Details are not described herein again.

S1303: The authorization server sends an application layer response message #5 to the linked application of the DVB-I client. Correspondingly, the linked application #1 of the DVB-I client receives the application layer response message #5 from the authorization server.

S1304: The DVB-I client deletes, based on the interaction result #3, a service for which confirmation is canceled.

S1305: The authorization server sends a notification message #4 to the management server #1 of the service provider #1, where the notification message #4 indicates that the user cancels confirmation of a service in the service list #1. Correspondingly, the management server #1 of the service provider #1 receives the notification message #4 from the authorization server.

It may be understood that, the authorization server indicates the user to cancel the confirmation of the service in the service list #1, that is, indicates to cancel a confirmation identifier previously allocated to the service in the service list #1.

S1306: The authorization server sends a notification message #5 to the management server #2 of the service provider #2, where the notification message #5 indicates that the user cancels confirmation of a service in the service list #2. Correspondingly, the management server #2 of the service provider #2 receives the notification message #5 from the authorization server.

It may be understood that, the authorization server indicates the user to cancel the confirmation of the service in the service list #2, that is, indicates to cancel a confirmation identifier previously allocated to the service in the service list #1.

Solution 4: This solution is based on the architecture shown in FIG. 3. The service list server obtains service list configuration information from one or more service providers, where the service list configuration information includes service information and the foregoing first information (refer to the descriptions in S401). The service list server may configure, based on the obtained service list configuration information, a service list that includes the corresponding first information, and send the service list to the terminal device. In this solution, the DVB-I client depends on a linked application to interact with the user and the service provider. The following describes the solution in detail.

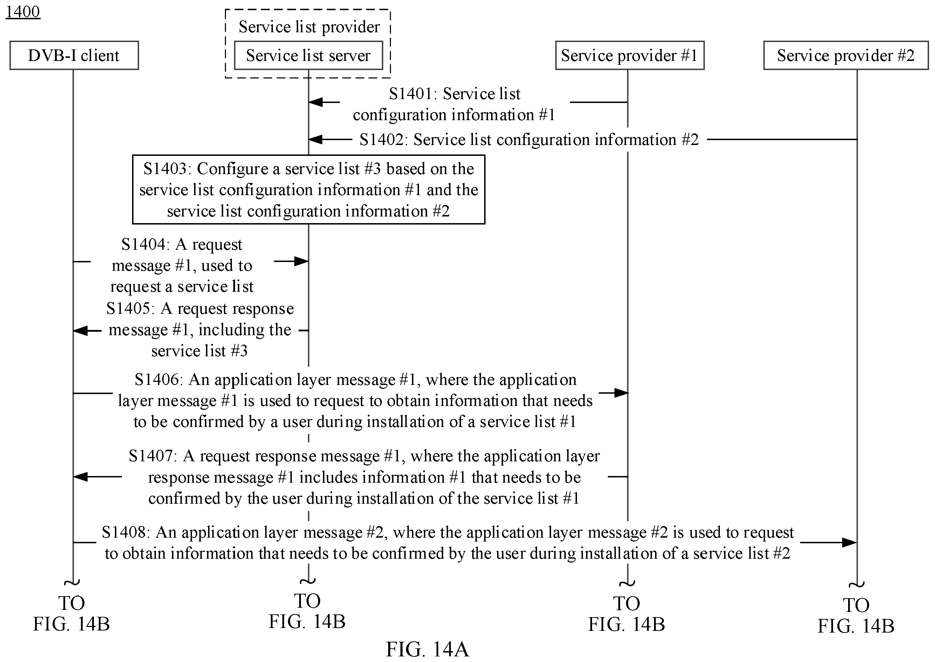

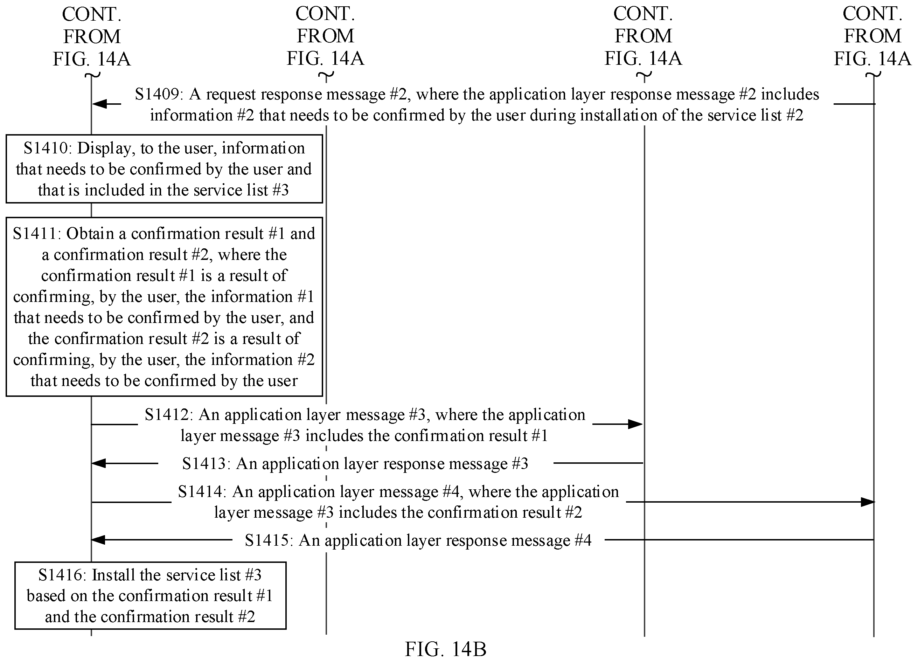

FIG. 14A and FIG. 14B are a schematic flowchart of a service list installation method 1400 according to an embodiment of this application. For ease of description, in this solution, an example in which the service list server obtains the service list configuration information from management servers of two service providers, and the first information included in the service list configuration information is information that needs to be confirmed by the user during installation of a service list is used for description. The method includes the following steps.

S1401: The service list server receives service list configuration information #1 from a management server #1 of a service provider #1.

The service list configuration information #1 includes a service list #1 provided by the service provider #1 and information about a linked application #1, where the service list #1 includes service information of at least one service.

Optionally, the information about the linked application #1 includes at least one of the following: an identifier of the linked application #1, a type of the linked application #1, a launch condition of the linked application #1, and a life cycle of the linked application #1. For example, if it is specified that a linked application #1 type of linked applications #1 whose identifiers are 50 to 100 is an agreement/authorization application that needs to be used during installation of the service list, an application may be selected from the applications whose identifiers are 50 to 100 as the linked application #1. For other descriptions, refer to the descriptions in S401. Details are not described herein again.

For example, the service list configuration information #1 may be manually configured offline by the service provider, or may be determined by the management server #1 through interaction with the service list server.

For example, the service list #1 includes service information of a service #1 and a service #2, the information about the linked application #1 includes the identifier of the linked application #1 (for example, the identifier of the linked application #1 is 60), the launch condition of the linked application #1 (for example, when the service list #1 is installed), and the life cycle (for example, one week) of the linked application #1. In this case, a structure of a service list F corresponding to the service list configuration information #1 is shown in Table 10.

**Table 10**

| Service list F | |
|---|---|
| Service provider name: service provider #1 | |
| Information about the linked application #1 | Identifier: 60 |
| | Launch condition: during installation of the service list #1 |
| | Life cycle: one week |
| Service information of service #1 | Service ID 1 |
| | Service name 1 |
| | LCN 1 |
| | Service type 1 |
| | Service instance 1 |
| Service information of service #2 | Service ID 2 |
| | Service name 2 |
| | LCN 2 |
| | Service type 2 |
| | Service instance 2 |

S1402: The service list server receives service list configuration information #2 from a management server #2 of a service provider #2.

Optionally, the service list configuration information #2 includes a service list #2 provided by the service provider #2 and information about a linked application #2, where the service list #2 includes service information of at least one service.

Optionally, the information about the linked application #2 includes at least one of the following: an identifier of the linked application #2, a type of the linked application #2, a launch condition of the linked application #2, and a life cycle of the linked application #2. Other descriptions in S1402 are similar to those in S1401, and details are not described herein again.

For example, the service list #2 includes service information of a service #3 and a service #4, the information about the linked application #2 includes the identifier of the linked application #2 (for example, the identifier of the linked application #2 is 80), the launch condition of the linked application #2 (for example, when the service list #2 is installed), and the life cycle (for example, one week) of the linked application #2. In this case, a structure of a service list G corresponding to the service list configuration information #2 is shown in Table 11.

**Table 11**

| Service list G | |
|---|---|
| Service provider name: service provider #2 | |
| Information about the linked application #2 | Identifier: 80 |
| | Launch condition: during installation of the service list #2 |
| | Life cycle: one week |
| Service information of service #3 | Service ID 3 |
| | Service name 3 |
| | LCN 3 |
| | Service type 3 |
| | Service instance 3 |
| Service information of service #4 | Service ID 4 |
| | Service name 4 |
| | LCN 4 |
| | Service type 4 |
| | Service instance 4 |

S1403: The service list server configures a service list #3 based on the service list configuration information #1 and the service list configuration information #2.

The service list #3 includes the service list #1, the service list #2, the information about the linked application #1, and the information about the linked application #2.

Table 10 and Table 11 are used as an example. In a possible implementation, the service list server may directly concatenate Table 10 and Table 11 to obtain the service list #3. A structure of the service list #3 obtained after concatenation is shown in Table 12.

**Table 12**

| Service list F | |
|---|---|
| Service provider name: service provider #1 | |
| Information about the linked application #1 | Identifier: 60 |
| | Launch condition: during installation of the service list #1 |
| | Life cycle: one week |
| Service information of service #1 | Service ID 1 |
| | Service name 1 |
| | LCN 1 |
| | Service type 1 |
| | Service instance 1 |
| Service information of service #2 | Service ID 2 |
| | Service name 2 |
| | LCN 2 |
| | Service type 2 |
| | Service instance 2 |

| Service list G | |
|---|---|
| Service provider name: service provider #2 | |
| Information about the linked application #2 | Identifier: 80 |
| | Launch condition: during installation of the service list #2 |
| | Life cycle: one week |
| Service information of service #3 | Service ID 3 |
| | Service name 3 |
| | LCN 3 |
| | Service type 3 |
| | Service instance 3 |
| Service information of service #4 | Service ID 4 |
| | Service name 4 |
| | LCN 4 |
| | Service type 4 |
| | Service instance 4 |

S1404: The DVB-I client sends a request message #1 to the service list server, where the request message #1 is used to request a service list. Correspondingly, the service list server receives the request message #1 from the DVB-I client.

Optionally, the DVB-I client requests the service list from the service list server based on a configuration. For example, the configuration may be that the service list is periodically obtained, or the service list is obtained upon first startup.

S1405: The service list server sends a request response message #1 to the DVB-I client, where the request response message #1 includes the service list #3. Correspondingly, the DVB-I client receives the request response message #1 from the service list server.

S1406: The DVB-I client activates the linked application #1, and sends an application layer message #1 to the service provider #1 through the linked application #1, where the application layer message #1 is used to request to obtain information that needs to be confirmed by the user during installation of the service list #1. Correspondingly, the service provider #1 receives the application layer message #1 from the linked application #1 of the DVB-I client.

S1407: The service provider #1 sends an application layer response message #1 to the linked application #1 of the DVB-I client, where the application layer response message #1 includes information #1 that needs to be confirmed by the user during installation of the service list #1. Correspondingly, the linked application #1 of the DVB-I client receives the application layer response message #1 from the authorization server.

Optionally, the application layer response message #1 further includes an application scope of the information #1 that needs to be confirmed by the user.

S1408: The DVB-I client activates the linked application #2, and sends an application layer message #2 to the service provider #2 through the linked application #2, where the application layer message #2 is used to request to obtain information that needs to be confirmed by the user during installation of the service list #2. Correspondingly, the service provider #2 receives the application layer message #2 from the linked application #2 of the DVB-I client.

S1409: The service provider #2 sends an application layer response message #2 to the linked application #2 of the DVB-I client, where the application layer response message #2 includes the information #2 that needs to be confirmed by the user during installation of the service list #2. Correspondingly, the linked application #2 of the DVB-I client receives the application layer response message #2 from the authorization server.

Optionally, the application layer response message #2 further includes an application scope of the corresponding information #2 that needs to be confirmed by the user.

S1410: The DVB-I client displays, to the user, the information that needs to be confirmed by the user.

S1411: The DVB-I client obtains a confirmation result #1 (which may also be referred to as an interaction result #1) and a confirmation result #2 (which may also be referred to as an interaction result #2), where the confirmation result #1 is a result of confirming, by the user, the information #1 that needs to be confirmed by the user, and the confirmation result #2 is a result of confirming, by the user, the information #2 that needs to be confirmed by the user.

S1412: The linked application #1 of the DVB-I client sends an application layer message #3 to the service provider #1, where the application layer message #3 includes the confirmation result #1. Correspondingly, the service provider #1 receives the application layer message #3 from the DVB-I client.

S1413: The authorization server sends an application layer response message #3 to the linked application #1 of the DVB-I client. Correspondingly, the DVB-I client receives the application layer response message #3 from the authorization server.

S1414: The linked application #2 of the DVB-I client sends an application layer message #4 to the service provider #2, where the application layer message #4 includes the confirmation result #2. Correspondingly, the service provider #2 receives the application layer message #4 from the DVB-I client.

S1415: The authorization server sends an application layer response message #4 to the linked application #2 of the DVB-I client. Correspondingly, the DVB-I client receives the application layer response message #4 from the authorization server.

S1416: The DVB-I client installs the service list #3 based on the confirmation result #1 and the confirmation result #2.

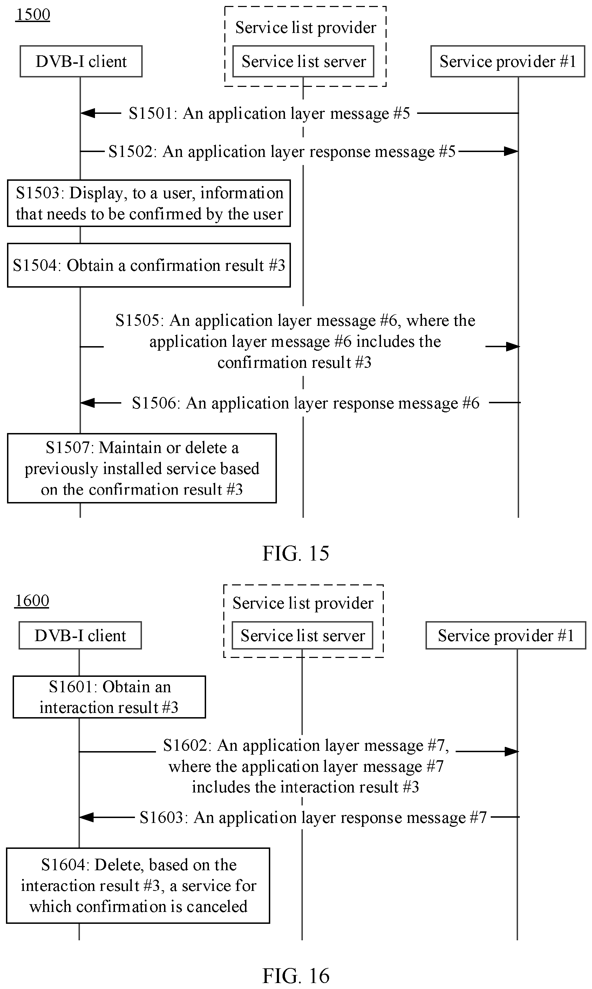

Based on the method 1400, in a possible scenario, after a period of time following completion of installation of all services in the service list #3, because information related to installation of the service list #3 changes, the service provider may directly provide updated information related to installation of the service list #3 to the DVB-I client. A scenario in which after a service provided by the service provider #1 (that is, a service in the service list #1) is installed, the corresponding information that needs to be confirmed by the user changes is used as an example for description herein. The following describes an update procedure with reference to FIG. 15.

S1501: The service provider #1 sends an application layer message #5 to the linked application #1 of the DVB-I client, where the application layer message #5 includes information #3 that needs to be confirmed by the user, and the information #3 that needs to be confirmed by the user is update information that needs to be confirmed by the user for maintaining an installed service that is provided by the service provider #1 and that is in the service list #3. Correspondingly, the linked application #1 of the DVB-I client receives the application layer message #5 from the service provider #1.

S1502: The linked application #1 of the DVB-I client sends an application layer response message #5 to the service provider #1. Correspondingly, the service provider #1 receives the application layer response message #5 from the linked application #1 of the DVB-I client.

S1503: The DVB-I client displays, to the user, the information #3 that needs to be confirmed by the user.

S1504: The DVB-I client obtains a confirmation result #3 (which may also be referred to as an interaction result #3), where the confirmation result #3 is a result of confirming, by the user, the information #3 that needs to be confirmed by the user.

S1505: The linked application #1 of the DVB-I client sends an application layer message #6 to the service provider #1, where the application layer message #6 includes the confirmation result #3. Correspondingly, the service provider #1 receives the application layer message #6 from the linked application #1 of the DVB-I client.

S1506: The service provider #1 sends an application layer response message #6 to the linked application #1 of the DVB-I client. Correspondingly, the linked application #1 of the DVB-I client receives the application layer response message #6 from the service provider #1.

S1507: The DVB-I client maintains or deletes a previously installed service based on the confirmation result #3.

Based on the method 1400, in a possible scenario, after a period of time following completion of installation of all the services in the service list #3, the user decides to cancel the previous confirmation result #1. The following describes the update procedure with reference to FIG. 16.

S1601: The DVB-I client obtains an interaction result #3 from the user, where the interaction result #3 indicates that the user cancels the confirmation result #1.

S1602: The DVB-I client sends an application layer message #7 to the service provider #1 through the linked application #1, where the application layer message #7 includes the interaction result #3. Correspondingly, the service provider #1 receives the application layer message #7 from the linked application #1 of the DVB-I client.

Optionally, the application layer message #7 includes a cancellation scope.

S1603: The service provider #1 sends an application layer response message #7 to the linked application #1 of the DVB-I client. Correspondingly, the linked application #1 of the DVB-I client receives the application layer response message #7 from the service provider #1.

Optionally,
S1604: The DVB-I client deletes, based on the interaction result #3, a service for which confirmation is canceled.

It may be understood that, the solutions in embodiments of this application may be properly combined for use, and explanations or descriptions of terms appearing in the embodiments may be mutually referenced or explained in the embodiments. This is not limited.

It should be further understood that, sequence numbers of the foregoing processes do not mean a sequence of performing the processes. The sequence of performing the processes should be determined based on functions and internal logic of the processes, and should not be construed as any limitation on implementation processes of embodiments of this application.

It may be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be further understood that, in the foregoing method embodiments, methods and operations implemented by a device may alternatively be implemented by a component (for example, a chip or a circuit) of the device.

The foregoing describes in detail the method provided in embodiments of this application with reference to FIG. 1 to FIG. 16. The foregoing methods are mainly described from a perspective of interaction between devices. It may be understood that, to implement the foregoing functions, each device includes a corresponding hardware structure and/or software module for performing each function.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

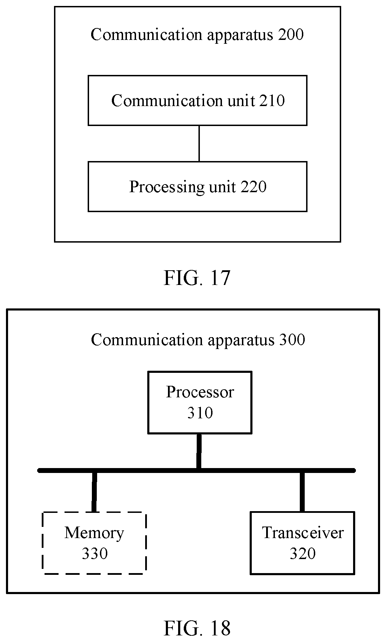

The following describes in detail communication apparatuses provided in embodiments of this application with reference to FIG. 17 and FIG. 18. It should be understood that, descriptions of apparatus embodiments correspond to the descriptions of the method embodiments. Therefore, for content that is not described in detail, refer to the foregoing method embodiments. For brevity, details of a part of content are not described again. In embodiments of this application, each device may be divided into function modules based on the foregoing method examples. For example, function modules may be obtained through division based on corresponding functions, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used. An example in which each function module is obtained through division based on each corresponding function is used below for description.

The foregoing describes in detail a communication method provided in this application. The following describes a communication apparatus provided in this application. In a possible implementation, the apparatus is configured to implement the steps or the procedures corresponding to the DVB-I client in the foregoing method embodiments. In another possible implementation, the apparatus is configured to implement the steps or procedures corresponding to the service list server in the foregoing method embodiments. In still another possible implementation, the apparatus is configured to implement the steps or the procedures corresponding to the authorization server in the foregoing method embodiments.

FIG. 17 is a block diagram of a communication apparatus 200 according to an embodiment of this application. As shown in FIG. 17, the apparatus 200 may include a communication unit 210 and a processing unit 220. The communication unit 210 may communicate with an external device, and the processing unit 220 is configured to process data. The communication unit 210 may also be referred to as a communication interface or a transceiver unit.

In a possible design, the apparatus 200 may implement the steps or the procedures performed by the service list server in the foregoing method embodiments. The processing unit 220 is configured to perform processing-related operations of the service list server in the foregoing method embodiments, and the communication unit 210 is configured to perform sending-related operations of the service list server in the foregoing method embodiments.

In another possible design, the apparatus 200 may implement the steps or the procedures performed by the DVB-I client in the foregoing method embodiments. The communication unit 210 is configured to perform receiving-related operations of the DVB-I client in the foregoing method embodiments, and the processing unit 220 is configured to perform processing-related operations of the DVB-I client in the foregoing method embodiments.

In still another possible design, the apparatus 200 may implement the steps or the procedures performed by the authorization server in the foregoing method embodiments. The communication unit 210 is configured to perform receiving-related operations of the authorization server in the foregoing method embodiments, and the processing unit 220 is configured to perform processing-related operations of the authorization server in the foregoing method embodiments.

It should be understood that, the apparatus 200 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 200 may be specifically the service list server in the foregoing embodiments, and may be configured to perform the procedures and/or steps corresponding to the service list server in the foregoing method embodiments; or the apparatus 200 may be specifically the DVB-I client in the foregoing embodiments, and may be configured to perform the procedures and/or steps corresponding to the DVB-I client in the foregoing method embodiments; or the apparatus 200 may be specifically the authorization server in the foregoing embodiments, and may be configured to perform the procedures and/or steps corresponding to the authorization server in the foregoing method embodiments. To avoid repetition, details are not described herein again.

The apparatus 200 in each of the foregoing solutions has a function of implementing corresponding steps performed by the service list server in the foregoing methods, or the apparatus 200 in each of the foregoing solutions has a function of implementing corresponding steps performed by the DVB-I client in the foregoing methods, or the apparatus 200 in each of the foregoing solutions has a function of implementing corresponding steps performed by the authorization server in the foregoing methods. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending/receiving operations and related processing operations in the method embodiments.

In addition, the communication unit may alternatively be a transceiver circuit (for example, may include a receiving circuit and a sending circuit), and the processing unit may be a processing circuit. In this embodiment of this application, the apparatus in FIG. 17 may be the service list server, the DVB-I client, or the authorization server in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 18 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through internal connection paths. The memory 330 is configured to store instructions, and the processor 310 may execute the instructions stored in the memory 330. In a possible implementation, the apparatus 300 is configured to implement the procedures and the steps corresponding to the service list server in the foregoing method embodiments. In another possible implementation, the apparatus 300 is configured to implement the procedures and the steps corresponding to the DVB-I client in the foregoing method embodiments. In still another possible implementation, the apparatus 300 is configured to implement the procedures and the steps corresponding to the authorization server in the foregoing method embodiments.

It should be understood that, the apparatus 300 may be specifically the service list server, the DVB-I client, or the authorization server in the foregoing embodiments, or may be a chip or a chip system. Correspondingly, the transceiver 320 may be a transceiver circuit of the chip. This is not limited herein. Specifically, the apparatus 300 may be configured to perform the steps and/or procedures corresponding to the service list server, the DVB-I client, or the authorization server in the foregoing method embodiments. Optionally, the memory 330 may include a read-only memory and a random access memory, and provide instructions and data to the processor. A part of the memory may further include a nonvolatile random access memory. For example, the memory may further store information of a device type. The processor 310 may be configured to execute the instructions stored in the memory, and when the processor 310 executes the instructions stored in the memory, the processor 310 is configured to perform the steps and/or procedures corresponding to the service list server, the DVB-I client, or the authorization server in the foregoing method embodiments.

In an implementation process, the steps of the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The processor may be a general-purpose processor, a digital signal processor (digital signal processor, DSP), an ASIC, a field-programmable gate array (field-programmable gate array, FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

It may be understood that, the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that, the memory of the systems and methods described in this specification includes but is not limited to these memories and any memory of another appropriate type.

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions. When the computer instructions run on a computer, the operations and/or procedures performed by the service list server, the DVB-I client, or the authorization server in the method embodiments of this application are performed.

This application further provides a computer program product. The computer program product includes computer program code or instructions. When the computer program code or the instructions run on a computer, the operations and/or procedures performed by the service list server, the DVB-I client, or the authorization server in the method embodiments of this application are performed.

In addition, this application further provides a chip. The chip includes a processor. A memory configured to store a computer program is disposed independent of the chip, and the processor is configured to execute the computer program stored in the memory, so that the operations and/or processing performed by the service list server, the DVB-I client, or the authorization server in any method embodiment are performed.

Further, the chip may include a communication interface. The communication interface may be an input/output interface, an interface circuit, or the like. Further, the chip may include the memory.

In addition, this application further provides a communication system, including the service list server, the authorization server, and the DVB-I client in embodiments of this application.

It should be further noted that, the memory described in this specification is intended to include, but not limited to, these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that, ordinal numbers such as "first" and "second" in embodiments of this application are for distinguishing between a plurality of objects, but are not intended to limit a size, content, a sequence, a time sequence, priorities, importance, or the like of the plurality of objects. For example, first information and second information do not indicate a difference in information amount, content, priority, importance, or the like.

It should be further understood that, in this application, "when", "if", and "provided that" mean that a network element performs corresponding processing in an objective situation, but do not constitute a limitation on time, do not require that the network element has a determining action during implementation, and do not mean other limitations either.

It should be further understood that, in this application, "at least one" means one or more, and "a plurality of" means two or more. "At least one item (piece) of the following" or a similar expression thereof means any combination of these items, including any combination of singular items (pieces) or plural items (pieces). For example, at least one of a, b, or c may represent a, b, c, a and b, a and c, b and c, or a, b, and c.

It should be further understood that, the term "and/or" in this specification describes only an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. For example, A/B indicates A or B.

It should be further understood that, in embodiments of this application, "B corresponding to A" indicates that B is associated with A, and B may be determined based on A. However, it should be further understood that, determining B based on A does not mean that B is determined based only on A. B may alternatively be determined based on A and/or other information.

## Claims

1. A service list installation method, comprising:
obtaining a service list, wherein the service list comprises first information, and the first information is used to obtain a first interaction result from a user during installation of the service list;
obtaining the first interaction result based on the first information; and
installing or skipping installing the service list based on the first interaction result.

2. The method according to claim 1, wherein
the first information comprises information that needs to be confirmed by the user during installation of the service list or a first address, the first address is an access portal address of the information that needs to be confirmed by the user during installation of the service list, and the first interaction result comprises a result of confirming, by the user, the information that needs to be confirmed by the user;
or,
the first information is used to request the user to provide authentication information required during installation of the service list, and the first interaction result comprises the authentication information provided by the user.

3. The method according to claim 2, wherein the first service list further comprises second information, the second information is used to send a result of interaction with the user, and the method further comprises:
sending the first interaction result based on the second information.

4. The method according to claim 3, wherein the second information comprises a second address, and the second address is a destination address to which the first interaction result is sent.

5. The method according to claim 3 or 4, wherein after the installing the service list based on the first interaction result, the method further comprises:
obtaining a second interaction result from the user, wherein the second interaction result indicates the user to update or cancel the first interaction result;
sending the second interaction result based on the second information; and
maintaining or deleting the service list based on the second interaction result.

6. The method according to claim 1, wherein the first information indicates a first linked application.

7. The method according to claim 6, wherein the first information comprises information about the first linked application, and the information about the first linked application comprises at least one of the following: an identifier of the first linked application, a type of the first linked application, a launch condition of the first linked application, and a life cycle of the first linked application.

8. The method according to claim 6 or 7, wherein the method further comprises:
sending, through the first linked application, a result of interaction with the user.

9. The method according to any one of claims 6 to 8, wherein the method further comprises:
obtaining, through the first linked application, information that needs to be confirmed by the user during installation of the service list, wherein the first interaction result comprises a result of confirming, by the user, the information that needs to be confirmed by the user;
or,
obtaining request information through the first linked application, wherein the request information is used to request the user to provide authentication information required during installation of the service list, and the first interaction result comprises the authentication information provided by the user.

10. The method according to any one of claims 6 to 9, wherein after the installing the service list based on the first interaction result, the method further comprises:
obtaining a second interaction result from the user through the first linked application or a second linked application, wherein the second interaction result indicates the user to update or cancel the first interaction result, and the second linked application is used to implement interaction with the user after the service list is installed;
sending the second interaction result through the first linked application or the second linked application; and
maintaining or deleting the service list based on the second interaction result.

11. The method according to claim 10, wherein the first information further comprises information about the second linked application, and the information about the second linked application comprises at least one of the following: an identifier of the second linked application, a type of the second linked application, a launch condition of the second linked application, and a life cycle of the second linked application.

12. The method according to any one of claims 2 to 5 and 9, wherein the installing or skipping installing the service list based on the first interaction result comprises:
if the first interaction result indicates that the user agrees to the information that needs to be confirmed by the user, installing the service list;
or,
receiving authentication confirmation information, and if the authentication confirmation information indicates that the authentication information provided by the user has passed authentication, installing the service list.

13. The method according to any one of claims 2 to 5, 9 and 12, wherein the information that needs to be confirmed by the user during installation of the service list comprises at least one of an agreement, a term, and a condition to which the user needs to agree to access a service in the service list.

14. The method according to any one of claims 1 to 13, wherein the service list further comprises service information of at least one service.

15. A service list installation method, comprising:
configuring a service list, wherein the service list comprises first information, the first information is used to obtain a first interaction result from a user during installation of the service list, and the first interaction result is used to determine whether a terminal installs the service list; and
sending the service list to the terminal.

16. The method according to claim 15, wherein
the first information comprises information that needs to be confirmed by the user during installation of the service list or a first address, the first address is an access portal address of the information that needs to be confirmed by the user during installation of the service list, and the first interaction result comprises a result of confirming, by the user, the information that needs to be confirmed by the user;
or,
the first information is used to request the user to provide authentication information required during installation of the service list, and the first interaction result comprises the authentication information provided by the user.

17. The method according to claim 16, wherein the first service list further comprises second information, the second information is used to send a result of interaction with the user, and the method further comprises:
sending the first interaction result based on the second information.

18. The method according to claim 17, wherein the second information comprises a second address, and the second address is a destination address to which the first interaction result is sent.

19. The method according to claim 15, wherein the first information indicates a first linked application.

20. The method according to claim 19, wherein the first information comprises information about the first linked application, and the information about the first linked application comprises at least one of the following: an identifier of the first linked application, a type of the first linked application, a launch condition of the first linked application, and a life cycle of the first linked application.

21. The method according to any one of claims 15 to 20, wherein the service list comprises service information of at least one service.

22. The method according to claim 21, wherein the method further comprises:
receiving first service list configuration information from a service provider, wherein the first service list configuration information comprises the service information and the first information;
or,
receiving second service list configuration information from a service provider, wherein the second service list configuration information comprises the service information; and
determining the first information based on the service information.

23. The method according to any one of claims 15 to 22, wherein the first information further indicates a second linked application, and the second linked application is used to implement interaction with the user after the service list is installed.

24. The method according to claim 23, wherein the first information further comprises information about the second linked application, and the information about the second linked application comprises at least one of the following: an identifier of the second linked application, a type of the second linked application, a launch condition of the second linked application, and a life cycle of the second linked application.

25. A service list installation method, comprising:
receiving a first interaction result from a terminal, wherein the first interaction result is a result of interaction between the terminal and a user, and the first interaction result is used to determine whether the terminal installs the service list; and
sending a first message to the terminal, wherein the first message is used to confirm that the first interaction result is received.

26. The method according to claim 25, wherein the receiving the first confirmation message from the terminal comprises:
receiving the first interaction result from a first linked application of the terminal.

27. The method according to claim 25 or 26, wherein
the first interaction result comprises a result of confirming, by the user, the information that needs to be confirmed by the user.

28. The method according to claim 27, wherein the information that needs to be confirmed by the user during installation of the service list comprises at least one of an agreement, a term, and a condition to which the user needs to agree to access a service in the service list.

29. The method according to claim 25 or 26, wherein
if the first interaction result comprises authentication information provided by the user, the first message comprises authentication confirmation information, and the authentication confirmation information indicates that the authentication information provided by the user has passed or not passed authentication.

30. The method according to any one of claims 25 to 29, wherein the first interaction result is used to determine that the terminal is capable of installing the service list, and the method further comprises:
receiving a second interaction result from the terminal, wherein the second interaction result indicates the user to update or cancel the first interaction result.

31. The method according to claim 30, wherein the receiving the second interaction result from the terminal comprises:
receiving the second interaction result from a second linked application of the terminal, wherein the second linked application is used to implement interaction with the user after the service list is installed.

32. A communication apparatus, wherein the apparatus comprises a module or a unit configured to perform the method according to any one of claims 1 to 31.

33. A communication apparatus, comprising at least one processor, wherein
the at least one processor is configured to execute a computer program or instructions stored in a memory, to perform the method according to any one of claims 1 to 31.

34. A computer-readable storage medium, wherein the computer-readable storage medium stores instructions, and when the instructions are executed by a computer, the method according to any one of claims 1 to 31 is performed.

35. A computer program product comprising a computer program or instructions, wherein when the computer program product is run on a computer, the method according to any one of claims 1 to 31 is performed.
